(19) Europäisches Patentamt / European Patent Office / Office européen des brevets

(11) EP 3 196 250 B1

(12) # EUROPEAN PATENT SPECIFICATION

(45) Date of publication and mention of the grant of the patent:
**20.02.2019 Bulletin 2019/08**

(21) Application number: **15836800.1**

(22) Date of filing: **10.08.2015**

(51) Int Cl.:
***C08L 53/02*** (2006.01) ***B29C 65/48*** (2006.01)
***C08L 23/26*** (2006.01) ***C08L 29/14*** (2006.01)
***C09J 123/14*** (2006.01) ***C09J 123/26*** (2006.01)
***C09J 129/14*** (2006.01) ***C09J 153/02*** (2006.01)
***C09J 151/06*** (2006.01) ***C08L 51/06*** (2006.01)

(86) International application number:
**PCT/JP2015/072704**

(87) International publication number:
**WO 2016/031550 (03.03.2016 Gazette 2016/09)**

(54) **THERMOPLASTIC POLYMER COMPOSITION AND MOLDED ARTICLE**
THERMOPLASTISCHE POLYMERZUSAMMENSETZUNG UND FORMARTIKEL
COMPOSITION DE POLYMÈRE THERMOPLASTIQUE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2014 JP 2014172062**

(43) Date of publication of application:
**26.07.2017 Bulletin 2017/30**

(73) Proprietor: **Kuraray Co., Ltd.**
**Kurashiki-shi, Okayama 710-0801 (JP)**

(72) Inventors:
- **MINAMIDE, Asako**
**Kamisu-shi**
**Ibaraki 314-0197 (JP)**
- **MASUDA, Mikio**
**Kamisu-shi**
**Ibaraki 314-0197 (JP)**
- **JOGO, Yosuke**
**Kamisu-shi**
**Ibaraki 314-0197 (JP)**

(74) Representative: **Müller-Boré & Partner Patentanwälte PartG mbB**
**Friedenheimer Brücke 21**
**80639 München (DE)**

(56) References cited:
**WO-A1-2012/014757** **WO-A1-2012/026501**
**WO-A1-2013/105392** **WO-A1-2014/123163**
**JP-A- H 021 788** **JP-A- H11 130 932**
**JP-A- S62 131 052** **JP-A- 2010 126 597**
**JP-A- 2010 235 666**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 196 250 B1

**Description**

TECHNICAL FIELD

The present invention relates to a thermoplastic polymer composition and a molded article using the same.

BACKGROUND ART

A hydrogenation product (hydrogenated product) of a block copolymer of a conjugated diene compound and an aromatic vinyl compound is an elastomer, which is capable of being plasticized by heating, a so-called thermoplastic elastomer, has good weatherability and heat resistance and exhibits excellent rubber elasticity. Also, since the hydrogenated product is rich in flexibility and exhibits strength and elastic property equivalent to a vulcanized rubber without vulcanization, it is used in various industrial products, for example, daily commodities or automobile parts instead of a conventional vulcanized rubber.

However, even such a thermoplastic elastomer has still room for improvement in adhesive property to a polar resin, a resin containing inorganic filler (particularly, glass fiber), a ceramic, a glass, a metal or the like, and flexibility, strength and elastic property at row temperature.

On the other hand, in Patent Documents 1 and 2, thermoplastic polymer compositions which contain a styrenic thermoplastic elastomer and a polar group-containing polypropylene resin and have excellent adhesive property to a ceramic, a metal and a synthetic resin are disclosed. The thermoplastic polymer compositions are able to be adhered to a ceramic, a metal and a synthetic resin only by a heat treatment without coating of an adhesive or performing a primer treatment. Further, in Patent Document 3, a tacky agent composition using an aromatic vinyl-conjugated diene triblock copolymer and an aromatic vinyl-conjugated diene diblock copolymer is disclosed.

RELATED ART DOCUMENT

PATENT DOCUMENTS

Patent Document 1: WO 2013/105392
Patent Document 2: WO 2012/026501
Patent Document 3: Japanese Patent No. 2,710,812


SUMMARY OF THE INVENTION

PROBLEMS THAT THE INVENTION IS TO SOLVE

The thermoplastic polymer compositions described in Patent Documents 1 and 2 are able to be adhered to a polar resin and have a sufficient thermal creep resistance, but they become brittle at low temperature (about -40 to -30°C) and the joined body, which has been adhered using the composition has a problem in that it is broken by a slight impact.

The tacky agent composition described in Patent Document 3 is not only poor in the adhesive property to a polar resin, for example, a polyamide, but also insufficient in the thermal creep resistant because it is necessary to add a tackifying resin in order to obtain tackiness. Moreover, since the composition is a tacky agent, it has a strong tack property and it is difficult to handle as a molded article. In addition, there is no description as to a polar group-containing polypropylene resin.

An object of the invention is to provide a thermoplastic polymer composition which is able to be handled as a molded article, exhibits a good adhesive property to a ceramic, a metal, an olefinic resin or a polar resin in a broad temperature range from low temperature to room temperature and flexibility, and has high thermal creep resistance, and a molded article using the thermoplastic polymer composition.

MEANS FOR SOLVING THE PROBLEMS

According to the invention, the above object can be achieved by providing the following means.

[1] A thermoplastic polymer composition comprising from 10 to 100 parts by weight of a polar group-containing polypropylene-based resin (B) based on 100 parts by weight of a hydrogenated block copolymer (A) in which a

block copolymer containing a polymer block (S) including an aromatic vinyl compound unit and a polymer block (D) including a conjugated diene compound unit is hydrogenated,
wherein the hydrogenated block copolymer (A) is a mixture containing:
a hydrogenated block copolymer (A1) having at least one tan δ local maximum value in a range from -60 to -40°C, in which a block copolymer represented by formula (i) or (ii) shown below is hydrogentated:

(i) $(S\text{-}D)_n$

(ii) $(D\text{-}S)_n\text{-}D$

wherein S is a polymer block including an aromatic vinyl compound unit, D is a polymer block including a conjugated diene compound unit, and n is an integer from 1 to 5; and
a hydrogenated block copolymer (A2) in which a block copolymer represented by formula (iii) shown below is hydrogenated:

(iii) $(S\text{-}D)_m\text{-}S$

wherein, S is a polymer block including an aromatic vinyl compound unit, D is a polymer block including a conjugated diene compound unit, and m is an integer from 1 to 5, and
wherein a weight ratio of the hydrogenated block copolymer (A1) to the hydrogenated block copolymer (A2) is from 20:80 to 99:1.
[2] The thermoplastic polymer composition as described in [1], wherein at least a part of the hydrogenated block copolymer (A2) is a hydrogenated block copolymer (A2') in which a block copolymer represented by formula (iv) shown below is hydrogenated:

(iv) $(S\text{-}D2)_m\text{-}S$

wherein S is a polymer block including an aromatic vinyl compound unit, D2 is a polymer block including a conjugated diene compound unit, in which a total amount of a 1,2-bonding content and a 3,4-bonding content is 40% by mole or more based on a total content of whole bonding forms of the conjugated diene, and m is an integer from 1 to 5.
[3] The thermoplastic polymer composition as described in [2], wherein a content ratio of the hydrogenated block copolymer (A2') is from 20 to 100% by weight in the hydrogenated block copolymer (A2).
[4] The thermoplastic polymer composition as described in any one of [1] to [3], wherein the polymer block (D) including a conjugated diene compound unit contained in the hydrogenated block copolymer (A1) is a polymer block containing a conjugated diene compound in which a total amount of a 1,2-bonding amount and a 3,4-bonding amount is less than 40% by mole based on a total amount of whole bonding forms of the conjugated diene.
[5] The thermoplastic polymer composition as described in any one of [1] to [4], wherein the hydrogenated block copolymer (A1) is a hydrogenated block copolymer in which a diblock copolymer represented by a formula shown below is hydrogenated:

S-D

wherein S and D have the same meanings as defined above, respectively.
[6] The thermoplastic polymer composition as described in any one of [1] to [5], wherein the conjugated diene compound unit is an isoprene unit or a mixture unit of isoprene and butadiene.
[7] The thermoplastic polymer composition as described in any one of [1] to [6], wherein the polar group-containing polypropylene-based resin (B) is a carboxylic acid-modified polypropylene-based resin.
[8] The thermoplastic polymer composition as described in any one of [1] to [7], further comprising from 10 to 100 parts by weight of a polyvinyl acetal resin (C).
[9] The thermoplastic polymer composition as described in [8], wherein the polyvinyl acetal resin (C) is a polyvinyl butyral resin.
[10] A molded article using the thermoplastic polymer composition as described in any one of [1] to [9].
[11] The molded article as described in [10], wherein the thermoplastic polymer composition is adhered to at least one selected from a ceramic, a metal and a synthetic resin.
[12] The molded article as described in [11], wherein the thermoplastic polymer composition is adhered to at least two selected from a ceramic, a metal and a synthetic resin.

ADVANTAGE OF THE INVENTION

According to the invention, a thermoplastic polymer composition, which achieves conveniently and firmly an excellent adhesive property to a synthetic resin, a ceramic, a metal or the like with no primer treatment or the like, and a molded article using the thermoplastic polymer composition can be provided. Also, a thermoplastic polymer composition which is able to be handled as a molded article, exhibits an excellent adhesive property in a broad temperature range from low temperature to room temperature, and is excellent in flexibility and thermal creep resistance, and a molded article using the thermoplastic polymer composition.

Needless to say, the thermoplastic polymer composition and molded article according to the invention can be applied to a synthetic resin, a ceramic, a metal or the like, which has been subjected to a primer treatment or the like.

MODE FOR CARRYING OUT THE INVENTION

The thermoplastic polymer composition of the invention is a thermoplastic polymer composition, which contains from 10 to 100 parts by weight of a polar group-containing polypropylene-based resin (B) based on 100 parts by weight of a hydrogenated block copolymer (A) in which a block copolymer containing a polymer block (S) including an aromatic vinyl compound unit and a polymer block (D) including a conjugated diene compound unit is hydrogenated.

The hydrogenated block copolymer (A) is a mixture containing a hydrogenated block copolymer (A1) having at least one tan $\delta$ local maximum value in a range from -60 to -40°C and being in which a block copolymer represented by formula (i) or (ii) shown below is hydrogenated:

(i) $(S\text{-}D)_n$

(ii) $(D\text{-}S)_n\text{-}D$

(in the formulae above, S is a polymer block including an aromatic vinyl compound unit, D is a polymer block including a conjugated diene compound unit, and n is an integer from 1 to 5); and a hydrogenated block copolymer (A2) obtained by hydrogenating a block copolymer represented by formula (iii) shown below:

(iii) $(S\text{-}D)_m\text{-}S$

(in the formula above, S is a polymer block including an aromatic vinyl compound unit, D is a polymer block including a conjugated diene compound unit, and m is an integer from 1 to 5).

A weight ratio of the hydrogenated block copolymer (A1) to the hydrogenated block copolymer (A2) is from 20:80 to 99:1.

First, the thermoplastic polymer composition will be described and then the molded article will be described.

[Thermoplastic polymer composition]

The thermoplastic polymer composition of the invention is a thermoplastic polymer composition which contains from 10 to 100 parts by weight of a polar group-containing polypropylene-based resin (B) based on 100 parts by weight of a hydrogenated block copolymer (A) in which a block copolymer containing a polymer block (S) including an aromatic vinyl compound unit and a polymer block (D) including a conjugated diene compound unit is hydrogenated.

Also, the thermoplastic polymer composition may further contains a polyvinyl acetal resin (C), a tackifying resin, a softener and the like.

(Hydrogenated block copolymer (A))

The hydrogenated block copolymer (A) obtained by hydrogenating a block copolymer containing a polymer block (S) including an aromatic vinyl compound unit and a polymer block (D) including a conjugated diene compound unit, which is contained in the thermoplastic polymer composition, imparts flexibility, good mechanical properties and moldability and the like to the thermoplastic polymer composition and plays a role of a matrix in the composition.

-Polymer block (S) including aromatic vinyl compound unit-

The aromatic vinyl compound constituting the polymer block (S) including an aromatic vinyl compound unit includes, for example, styrene, $\alpha$-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene and 2-vinylnaphthalene. The polymer block (S) including an aromatic vinyl compound unit may be composed of a structural unit derived from only one kind of the aromatic vinyl compounds or may be composed of structural units derived from two or more kinds of the aromatic vinyl compounds. Among them, styrene, α-methylstyrene or 4-methylstyrene is preferred.

In the invention, the "polymer block (S) including an aromatic vinyl compound unit" is preferably a polymer block including 80% by weight or more of an aromatic vinyl compound unit, more preferably a polymer block including 90% by weight or more of an aromatic vinyl compound unit, and still more preferably a polymer block including 95% by weight or more of an aromatic vinyl compound unit (each being based on the charged amounts of the raw materials). The polymer block (S) including an aromatic vinyl compound unit may be composed of only the aromatic vinyl compound unit or may be composed of the aromatic vinyl compound unit and other copolymerizable monomer unit as far as the effect of the invention is not impaired.

The other copolymerizable monomer includes, for example, 1-butene, pentene, hexene, butadiene, isoprene and methyl vinyl ether. In the case of including the other copolymerizable monomer unit, the content thereof is preferably 20% by weight or less, more preferably 10% by weight or less, and still more preferably 5% by weight or less, based on the total amount of the aromatic vinyl compound unit and the other copolymerizable monomer unit.

In the invention, the hydrogenated block copolymer (A) having a polar group, for example, a hydroxyl group, bonded at the terminal thereof may also be used.

-Polymer block (D) including conjugated diene compound unit-

The conjugated diene compound constituting the polymer block (D) including a conjugated diene compound unit includes, for example, butadiene, isoprene, 2,3-dimethyl-1,3-butadiene, 1,3-pentadiene and 1,3-hexadiene. Among them, butadiene or isoprene is preferred.

The polymer block (D) including a conjugated diene compound unit may be composed of a structural unit derived from only one kind of the conjugated diene compounds or may be composed of structural units derived from two or more kinds of the conjugated diene compounds. The conjugated diene compound unit includes, for example, an isoprene unit, a butadiene unit and a mixture unit of isoprene and butadiene, and it is particularly preferably an isoprene unit or a mixture unit of isoprene and butadiene. When an isoprene unit or a mixture unit of isoprene and butadiene is used as the conjugated diene compound unit, there is an advantage in that the adhesive force is more increased.

The bonding form of the conjugated diene constituting the polymer block (D) is not particularly limited. For example, in the case of butadiene, a 1,2-bonding or a 1,4-bonding may be formed, and in the case of isoprene, a 1,2-bonding, a 3,4-bonding or a 1,4-bonding may be formed.

The 1,2-bonding content and 3,4-bonding content can be calculated according to $^1$H-NMR measurement. Specifically, it can be calculated from a ratio of an integrated value of the peaks present in 4.2 to 5.0 ppm derived from the 1,2-bonding unit and the 3,4-bonding unit and an integrated value of the peaks present in 5.0 to 5.45 ppm derived from the 1,4-bonding unit.

In the invention, the "polymer block (D) including a conjugated diene compound unit" is preferably a polymer block including 80% by weight or more of a conjugated diene compound unit, more preferably a polymer block including 90% by weight or more of a conjugated diene compound unit, and still more preferably a polymer block including 95% by weight or more of a conjugated diene compound unit (each being based on the charged amounts of the raw materials). The polymer block (D) including a conjugated diene compound unit may be composed of only the conjugated diene compound unit or may be composed of the conjugated diene compound unit and other copolymerizable monomer unit as far as the effect of the invention is not impaired.

The other copolymerizable monomer includes, for example, styrene, α-methylstyrene and 4-methylstyrene. In the case of including the other copolymerizable monomer unit, the content thereof is preferably 20% by weight or less, more preferably 10% by weight or less, and still more preferably 5% by weight or less, based on the total amount of the conjugated diene compound unit and the other copolymerizable monomer unit.

-Hydrogenated block copolymer (A1)-

The hydrogenated block copolymer (A1) has at least one tan δ local maximum value in a range from -60 to -40°C and is one obtained by hydrogenating a block copolymer represented by formula (i) or (ii) shown below:

(i) $(S\text{-}D)_n$

(ii) $(D\text{-}S)_n\text{-}D$

(in the formulae above, S is a polymer block including an aromatic vinyl compound unit, D is a polymer block including a conjugated diene compound unit, and n is an integer from 1 to 5).

n is preferably an integer from 1 to 3, more preferably 1 or 2, and still more preferably 1.

When the hydrogenated block copolymer (A1) has at least one tan δ local maximum value in a range from -60 to -40°C, the thermoplastic polymer composition and the molded article each having excellent flexibility at low temperature are obtained. The hydrogenated block copolymer (A1) is more preferably that having at least one tan δ local maximum value in a range from -55 to -40°C.

The bonding form of the polymer block (S) including an aromatic vinyl compound unit and the polymer block (D) including a conjugated diene compound unit in the block copolymer represented by formula (i) or (ii) includes, for example, a diblock copolymer represented by S-D, a triblock copolymer represented by D-S-D, a tetrablock copolymer represented by S-D-S-D, a pentablock copolymer represented by D-S-D-S-D, and a mixture thereof.

From the standpoint of productivity, the hydrogenated block copolymer (A1) is preferably that obtained by hydrogenating a diblock or triblock copolymer represented by S-D or D-S-D, and more preferably that obtained by hydrogenating a diblock copolymer represented by S-D.

The content of the polymer block (S) including an aromatic vinyl compound unit in the block copolymer represented by formula (i) or (ii) is preferably from 5 to 75% by weight, more preferably from 8 to 60% by weight, still more preferably from 10 to 40% by weight, based on the total block copolymer, from the standpoint of flexibility and mechanical properties thereof.

In the polymer block (D) including a conjugated diene compound unit, the total amount of a 1,2-bonding content and a 3,4-bonding content is less than 40% by mole based on the total content of whole bonding forms of the conjugated diene. The polymer block (D) is more preferably that containing the conjugated diene compound unit in which the total amount of a 1,2-bonding content and a 3,4-bonding content is less than 20% by mole, and still more preferably less than 10% by mole. When the total amount of a 1,2-bonding content and a 3,4-bonding content is less than 40% by mole based on the total content of whole bonding forms, the flexibility at low temperature of the thermoplastic polymer composition and the molded article is sufficiently achieved.

The weight average molecular weight of the hydrogenated block copolymer (A1) is preferably from 30,000 to 300,000, more preferably from 35,000 to 200,000, still more preferably from 40,000 to 180,000, from the standpoint of mechanical properties and moldability thereof. Here, the weight average molecular weight is a weight average molecular weight determined by gel permeation chromatography (GPC) measurement and calculated in terms of standard polystyrene.

-Hydrogenated block copolymer (A2)-

The hydrogenated block copolymer (A2) is one obtained by hydrogenating a block copolymer represented by formula (iii) shown below:

(iii) $(S\text{-}D)_m\text{-}S$

(in the formula above, S is a polymer block including an aromatic vinyl compound unit, D is a polymer block including a conjugated diene compound unit, and m is an integer from 1 to 5).

m is preferably an integer from 1 to 3, more preferably 1 or 2, and still more preferably 1.

The bonding form of the polymer block (S) including an aromatic vinyl compound unit and the polymer block (D) including a conjugated diene compound unit in the block copolymer represented by formula (iii) includes, for example, a triblock copolymer represented by S-D-S, a pentablock copolymer represented by S-D-S-D-S, and a mixture thereof. Among them, a triblock copolymer represented by S-D-S is preferred.

The content of the polymer block (S) including an aromatic vinyl compound unit in the block copolymer represented by formula (iii) is preferably from 5 to 75% by weight, more preferably from 8 to 60% by weight, still more preferably from 10 to 40% by weight, most preferably from 10 to 35% by weight, based on the total block copolymer, from the standpoint of flexibility and mechanical properties thereof.

The weight average molecular weight of the hydrogenated block copolymer (A2) is preferably from 30,000 to 300,000, more preferably from 40,000 to 250,000, still more preferably from 50,000 to 200,000, most preferably from 70,000 to 200,000, from the standpoint of mechanical properties and moldability thereof. Here, the weight average molecular weight is a weight average molecular weight determined by gel permeation chromatography (GPC) measurement and calculated in terms of standard polystyrene.

The hydrogenated block copolymer (A) in the invention is preferably a mixture containing one obtained by hydrogenating a diblock copolymer represented by S-D as the hydrogenated block copolymer (A1) and one obtained by hydrogenating a triblock copolymer represented by S-D-S as the hydrogenated block copolymer (A2).

In the hydrogenated block copolymer (A2), at least a part thereof is preferably a hydrogenated block copolymer

(A2') obtained by hydrogenating a block copolymer represented by formula (iv) shown below.

(iv) $(S\text{-}D2)_m\text{-}S$

(in the formula above, S is a polymer block including an aromatic vinyl compound unit, D2 is a polymer block including a conjugated diene compound unit, in which the total amount of a 1,2-bonding content and a 3,4-bonding content is 40% by mole or more based on the total content of whole bonding forms of the conjugated diene, and m is an integer from 1 to 5).

When the conjugated diene compound unit in which the total amount of a 1,2-bonding content and a 3,4-bonding content is 40% by mole or more based on the total content of whole bonding forms of the conjugated diene is incorporated, adhesive force of the thermoplastic polymer composition and molded article to a metal is more increased. The total amount of a 1,2-bonding content and a 3,4-bonding content is more preferably 50% by mole or more.

In the hydrogenated block copolymer (A2), the content ratio of the hydrogenated block copolymer (A2') is not particularly limited, preferably from 20 to 100% by weight, more preferably from 40 to 100% by weight, and still more preferably from 60 to 100% by weight.

When the hydrogenated block copolymer (A), which can be used in the invention, is a mixture of the hydrogenated block copolymer (A1) having at least one tan δ local maximum value in a range from -60 to -40°C and the hydrogenated block copolymer (A2), the flexibility at low temperature can be imparted by (A1) and the excellent adhesive property in a broad temperature range can be imparted by the combination of (A1) and (A2).

The weight ratio of the hydrogenated block copolymer (A1) to the hydrogenated block copolymer (A2) is from 20:80 to 99:1, preferably from 20:80 to 70:30, more preferably from 20:80 to 60:40, and still more preferably from 20:80 to 55:45.

The hydrogenated block copolymer (A) is a hydrogenation product in which a part or all of unsaturated double bonds of the polymer block (D) including a conjugated diene compound unit are hydrogenated. By being hydrogenated a part or all of unsaturated double bonds of the polymer block (D), the heat resistance and weatherability can be increased. The hydrogenation rate (hydrogenated rate) of the polymer block (D) including a conjugated diene compound unit is preferably 70% or more, more preferably 80% or more, and still more preferably 85% or more. In the specification, the hydrogenated rate is a value obtained by measuring an iodine value of the block copolymer before and after the hydrogenation reaction.

(Production method of hydrogenated block copolymer (A))

A production method of the hydrogenated block copolymer (A) is not particularly limited and the hydrogenated block copolymer (A) can be produced by producing a non-hydrogenated block copolymer, for example, by an anionic polymerization method and then subjecting the non-hydrogenated block copolymer obtained to a hydrogenation reaction.

A production method of the non-hydrogenated block copolymer specifically includes, for example, (i) a method wherein the aromatic vinyl compound, the conjugated diene compound and the aromatic vinyl compound are sequentially polymerized by using an alkyllithium compound as an initiator; (ii) a method wherein the aromatic vinyl compound and the conjugated diene compound are sequentially polymerized by using an alkyllithium compound as an initiator, and then coupling is performed by adding a coupling agent; and (iii) a method wherein the conjugated diene compound and the aromatic vinyl compound are sequentially polymerized by using a dilithium compound as an initiator.

The alkyllithium compound for the methods (i) and (ii) includes, for example, methyllithium, ethyllithium, n-butyllithium, sec-butyllithium, tert-butyllithium and pentyllithium. The coupling agent for the method (ii) includes, for example, dichloromethane, dibromomethane, dichloroethane, dibromoethane and dibromobenzene. The dilithium compound for the method (iii) includes, for example, naphthalenedilithium and dilithiohexylbenzene.

The amounts of the initiator, for example, the alkyllithium compound or the dilithium compound, and the coupling agent used are decided according to the intended weight average molecular weight of the hydrogenated block copolymer (A). The initiator, for example, the alkyllithium compound or the dilithium compound is ordinarily used from 0.01 to 0.2 parts by weight based on 100 parts by weight of the total of the aromatic vinyl compound and the conjugated diene compound used in the anionic polymerization method. In the method (ii), the coupling agent is ordinarily used from 0.001 to 0.8 parts by weight based on 100 parts by weight of the total of the aromatic vinyl compound and the conjugated diene compound used in the anionic polymerization method.

The anionic polymerization is preferably performed in the presence of a solvent. The solvent is not particularly limited as far as it is inert to the initiator and does not adversely affect the polymerization, and includes, for example, a saturated aliphatic hydrocarbon, for example, hexane, heptane, octane or decane; an alicyclic hydrocarbon, for example, cyclopentane, cyclohexane or cyclooctane; and an aromatic hydrocarbon, for example, toluene, benzene or xylene. The polymerization is performed preferably at 0 to 80°C for 0.5 to 50 hours in any of the polymerization methods described above.

The 1,2-bonding content and the 3,4-bonding content in the non-hydrogenated block copolymer can be increased by adding an organic Lewis acid base in the anionic polymerization, and the 1,2-bonding content and the 3,4-bonding content can be controlled according to the addition amount of the organic Lewis acid base.

The organic Lewis acid base includes, for example, an ester, for example, ethyl acetate; an amine, for example, triethylamine, N,N,N',N'-tetramethylethylenediamine (TMEDA) or N-methylmorpholine; a nitrogen-containing heterocyclic aromatic compound, for example, pyridine; an amide, for example, dimethylacetamide; an ether, for example, dimethyl ether, diethyl ether, tetrahydrofuran (THF) or dioxane; a glycol ether, for example, ethylene glycol dimethyl ether or diethylene glycol dimethyl ether; a sulfoxide, for example, dimethyl sulfoxide; and a ketone, for example, acetone or methyl ethyl ketone.

The non-hydrogenated block copolymer can be isolated after the polymerization according to the method described above, by pouring the block copolymer contained in the reaction solution into a poor solvent to the block copolymer, for example, methanol, thereby solidifying the block copolymer or by pouring the reaction solution into hot water together with steam to azeotropically remove the solvent (steam stripping) and then drying.

The hydrogenation reaction can be performed by allowing the non-hydrogenated block copolymer to react with hydrogen in the presence of a hydrogenation catalyst, using a solution of the non-hydrogenated block copolymer dissolved in a solvent inert to the reaction and the hydrogenation catalyst or using the reaction solution described above without isolating the non-hydrogenated block copolymer.

The hydrogenation catalyst includes, for example, Raney nickel; a heterogeneous catalyst composed of a metal, for example, Pt, Pd, Ru, Rh or Ni, carried on a support, for example, carbon, alumina or diatomaceous earth; and a Ziegler catalyst composed of a combination of a transition metal compound with an alkylaluminum compound, an alkyllithium compound or the like; and a metallocene catalyst.

The hydrogenation reaction can be ordinarily performed under the conditions of a hydrogen pressure of 0.1 to 20 MPa, a reaction temperature of 20 to 250°C and a reaction time of 0.1 to 100 hours. According to the method, the hydrogenated block copolymer, that is, the hydrogenated block copolymer (A) can be isolated by pouring the hydrogenation reaction solution into a poor solvent, for example, methanol, to solidify or by pouring the hydrogenation reaction solution into hot water together With steam to azeotropically remove the solvent (steam stripping) and then drying.

(Polar group-containing polypropylene-based resin (B))

The thermoplastic polymer composition contains from 10 to 100 parts by weight of a polar group-containing polypropylene-based resin (B) based on 100 parts by weight of the hydrogenated block copolymer (A).

The polar group of the polar group-containing polypropylene-based resin (B) includes, for example, a (meth)acryloyloxy group; a hydroxyl group, an amido group; a halogen atom, for example, a chlorine atom; a carboxyl group, an acid anhydride group. The production method of the polar group-containing polypropylene-based resin (B) is not particularly limited, and can be obtained by performing random polymerization, block polymerization or graft polymerization of propylene (furthermore α-olefin, if desired) and a polar group-containing copolymerizable monomer according to a known method. Among them, a random copolymer or a graft copolymer is preferred, and a graft copolymer is more preferred. In addition, the polar group-containing polypropylene-based resin (B) can be obtained by subjecting a polypropylene-based resin to a modification reaction, for example, oxidation or chlorination, according to a known method.

The α-olefin described above includes, for example, ethylene, 1-butene, 1-pentene, 1-hexene, 1-octene, 4-methyl-1-pentene and cyclohexene. The ratio of the unit derived from the α-olefin other than propylene to the total structural units included in the polar group-containing polypropylene-based resin (B) is preferably from 0 to 45% by mole, more preferably from 0 to 35% by mole, and still more preferably from 0 to 25% by mole.

The polar group-containing copolymerizable monomer includes, for example, vinyl acetate, vinyl chloride, ethylene oxide, propylene oxide, acrylamide, an unsaturated carboxylic acid, an ester thereof and an anhydride thereof. Among them, an unsaturated carboxylic acid, an ester thereof or an anhydride thereof is preferred. The unsaturated carboxylic acid, the ester thereof and the anhydride thereof include, for example, a (meth)acrylic acid, a (meth)acrylic ester, maleic acid, maleic anhydride, fumaric acid, itaconic acid, itaconic anhydride, himic acid and himic anhydride. Among them, maleic anhydride is more preferred. The polar group-containing copolymerizable monomers may be used one kind alone or may be used in combination of two or more kinds.

As the polar group-containing polypropylene-based resin (B), polypropylene containing a carboxyl group as the polar group, namely, a carboxylic acid-modified polypropylene-based resin is preferred, a maleic acid-modified polypropylene-based resin or a maleic anhydride-modified polypropylene-based resin is more preferred, from the standpoint of compatibility with the polyvinyl acetal resin (C) described below.

The (meth)acrylic ester, which is exemplified as the polar group-containing copolymerizable monomer, specifically includes, for example, an alkyl acrylate, for example, methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate or 2-ethylhexyl acrylate; and an alkyl methacrylate, for example, methyl methacrylate, ethyl methacrylate, n-propyl methacrylate, isopropyl methacrylate, n-butyl methacrylate, isobutyl methacrylate, n-hexyl methacrylate, isohexyl methacrylate,

n-octyl methacrylate, isooctyl methacrylate or 2-ethylhexyl methacrylate. The (meth)acrylic esters may be used one kind alone or may be used in combination of two or more kinds.

The polar group contained in the polar group-containing polypropylene-based resin (B) may be post-treated after the polymerization. For example, the (meth)acrylic acid group or the carboxyl group may be neutralized by a metal ion to convert into an ionomer or may be esterified with methanol or ethanol. In addition, for example, hydrolysis of the vinyl acetate may be performed.

The melt flow rate (MFR) of the polar group-containing polypropylene-based resin (B) under conditions of 230°C and a load of 2.16 kg (21.18 N) is preferably from 0.1 to 100 g/10 minutes, more preferably from 1 to 100 g/10 minutes, still more preferably from 1 to 50 g/10 minutes, still further more preferably from 1 to 30 g/10 minutes, particularly preferably from 1 to 20 g/10 minutes, and most preferably from 1 to 15 g/10 minutes. When the MFR of the polar group-containing polypropylene-based resin (B) under conditions described above is 0.1 g/10 minutes or more, good adhesion strength to a metal and a ceramic is obtained at a heating temperature of 190°C or below. On the other hand, when the MFR is 100 g/10 minutes or less, the polar group-containing polypropylene-based resin (B) is easily available, and easily exhibits the mechanical properties.

The melting point of the polar group-containing polypropylene-based resin (B) is preferably 100°C or more, more preferably from 110 to 170°C, still more preferably from 120 to 150°C, most preferably from 130 to 140°C, from the standpoint of thermal creep resistance and adhesive property.

The ratio of the polar group-containing structural unit included in the polar group-containing polypropylene-based resin (B) to the total structural units included in the polar group-containing polypropylene-based resin (B) is preferably from 0.01 to 10% by weight, more preferably from 0.1 to 10% by weight, still more preferably from 0.1 to 3% by weight, and particularly preferably from 0.1 to 2% by weight. When the ratio of the polar group-containing structural unit is in the range, the affinity and compatibility with the hydrogenated block copolymer (A) are good, the mechanical properties of the thermoplastic polymer composition become good, and good adhesion strength to a metal and a ceramic is obtained at a heating temperature of 190°C or lower. In order to optimally control the ratio of the polar group-containing structural unit, the polypropylene-based resin including the polar group-containing structural unit in high concentration may be diluted with a polypropylene-based resin including no polar group-containing structural unit.

The thermoplastic polymer composition contains from 10 to 100 parts by weight of the polar group-containing polypropylene-based resin (B) based on 100 parts by weight of the hydrogenated block copolymer (A). When the polar group-containing polypropylene-based resin (B) is less than 10 parts by weight, a molded article composed of the thermoplastic polymer composition is difficult to adhere to a metal and a ceramic at 190°C or lower, and in the case where the adhesive body obtained is exposed to temperature environment of 60°C or more, the adhesive force becomes practically insufficient, and thus being likely to cause peeling. On the other hand, when the polar group-containing polypropylene-based resin (B) is more than 100 parts by weight, the thermoplastic polymer composition becomes hard, thereby being hard to exhibit flexibility and mechanical properties, although a sufficient adhesive property is obtained.

The content of the polar group-containing propylene-based copolymer (B) is preferably 15 parts by weight or more, more preferably 20 parts by weight or more, and preferably 70 parts by weight or less, more preferably 60 parts by weight or less, particularly preferably 30 parts by weight or less, based on 100 parts by weight of the hydrogenated block copolymer (A).

From the above, the content of the polar group containing polypropylene-based copolymer (B) is preferably from 15 to 70 parts by weight, more preferably from 15 to 60 parts by weight, still more preferably from 20 to 60 parts by weight, particularly preferably from 20 to 30 parts by weight, based on 100 parts by weight of the hydrogenated block copolymer (A).

(Polyvinyl acetal resin (C))

The thermoplastic polymer composition is preferred to further contain from 10 to 100 parts by weight of a polyvinyl acetal resin (C). The content thereof is more preferably from 10 to 50 parts by weight, and still more preferably from 15 to 30 parts by weight.

The polyvinyl acetal resin (C) is dispersed as a dispersed phase (island) in a continuous phase (sea) of the hydrogenated block copolymer (A) in the thermoplastic polymer composition. When the thermoplastic polymer composition contains 10 parts by weight or more of the polyvinyl acetal resin (C), adhesive strength to a ceramic, in particular, to a glass, can be achieved immediately after adhesion. Also, when the thermoplastic polymer composition contains 100 parts by weight or less of the polyvinyl acetal resin (C), good flexibility and mechanical properties can be obtained.

The polyvinyl acetal resin (C) ordinarily has a repeating unit represented by formula (I) shown below.

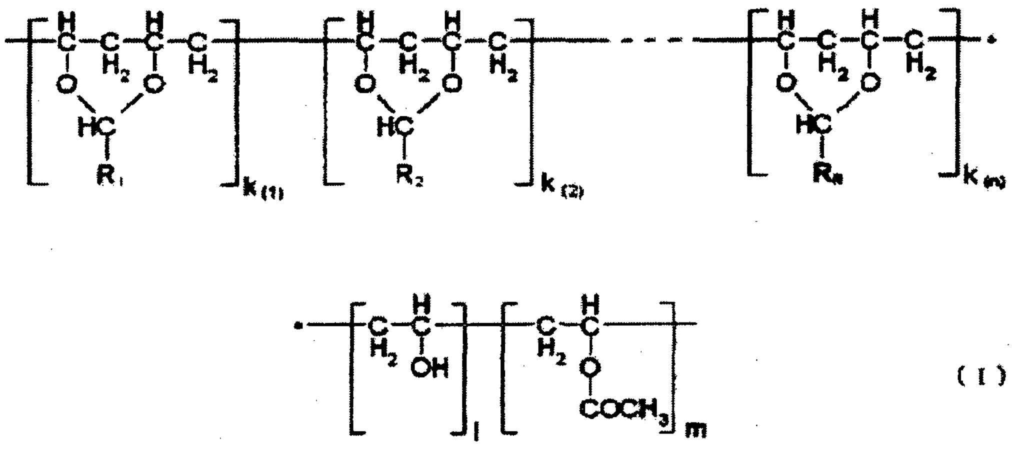

(I)

In formula (I) above, n represents a number of types of aldehydes used in acetalization reaction; each of $R_1$, $R_2$, ... , and $R_n$ represents an alkyl residue in an aldehyde used in an acetalization reaction or a hydrogen atom; each of $k_{(1)}$, $k_{(2)}$, ... , and $k_{(n)}$ represents the proportion (molar ratio) of the constitutional unit in [ ]; 1 represents a proportion (molar ratio) of vinyl alcohol unit; and m represents a proportion (molar ratio) of vinyl acetate unit; provided that $k_{(1)}+k_{(2)}+ ... +k_{(n)}+l+m=1$, and any of $k_{(1)}$, $k_{(2)}$, ... , $k_{(n)}$, 1 and m may be zero.

The repeating units are not particularly limited in the arrangement sequence described above, and may be arranged randomly, may be arranged in a block form or may be arranged in a tapered form.

The polyvinyl acetal resin (C) is preferably a polyvinyl butyral resin.

(Production method of polyvinyl acetal resin (C))

The polyvinyl acetal resin (C) can be obtained, for example, by allowing to react polyvinyl alcohol with an aldehyde.

The average polymerization degree of the polyvinyl alcohol used in the production of the polyvinyl acetal resin (C) is preferably from 100 to 4,000, more preferably from 100 to 3,000, still more preferably from 150 to 2,000, and particularly preferably from 200 to 1,500. When the average polymerization degree of the polyvinyl alcohol is 100 or more, the polyvinyl acetal resin (C) is easily produced and is good in handling property. When the average polymerization degree of the polyvinyl alcohol is 4,000 or less, the melt viscosity of the polyvinyl acetal resin (C) is not excessively high during the melt kneading, thereby being easy to produce the thermoplastic polymer composition.

The average polymerization degree of polyvinyl alcohol referred to herein is a value measured in accordance with the method of JIS K 6726. Specifically, the value determined from the intrinsic viscosity measured in water at 30°C after resaponification of polyvinyl alcohol and purification.

The production method of the polyvinyl alcohol is not particularly limited and, for example, polyvinyl alcohol which is produced by saponifying polyvinyl acetate with an alkali, an acid, aqueous ammonia or the like can be used. Also, a commercially available product may be used. The commercially available product includes, for example, "Kuraray Poval" series produced by Kuraray Co., Ltd. The polyvinyl alcohol may be completely saponified or partly saponified. The saponification degree is preferably 80% by mole or more, more preferably 90% by mole or more, and still more preferably 95% by mole or more.

Further, as the polyvinyl alcohol, a copolymer of vinyl alcohol and a monomer copolymerizable with vinyl alcohol, for example, an ethylene-vinyl alcohol copolymer or a partly saponified ethylene-vinyl alcohol copolymer, can be used. Moreover, a modified polyvinyl alcohol in which a carboxylic acid or the like is partly introduced can also be used. The polyvinyl alcohols may be used one kind alone or may be used in combination of two or more kinds.

The aldehyde used for the production of the polyvinyl acetal resin (C) is not particularly limited. The aldehyde includes, for example, formaldehyde (including paraformaldehyde), acetaldehyde (including paraacetaldehyde), propionaldehyde, n-butylaldehyde, isobutylaldehyde, pentanal, hexanal, heptanal, n-octanal, 2-ethylhexyl aldehyde, cyclohexanecarbaldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde and β-phenylpropionaldehyde. The aldehydes may be used one kind alone or may be used in combination of two or more kinds. Of the aldehydes, butylaldehyde is preferred and n-butylaldehyde is more preferred from the standpoint of easiness of production.

The polyvinyl acetal resin (C) obtained by the acetalization using n-butylaldehyde is particularly referred to as polyvinyl butyral (PVB).

In the invention, the content of butyral unit in acetal units (see the formula below) present in the polyvinyl acetal resin (C) is preferably 0.8 or more, more preferably 0.9 or more, still more preferably 0.95 or more, and particularly preferably substantially 1.

Specifically in the structural formula of the polyvinyl acetal resin (C) represented by formula (I) wherein only $R_1$ represents n-$C_3H_7$, the content is preferably represented by formula: $0.8 \leq k_{(1)}/(k_{(1)}+k_{(2)}+ \ldots +k_{(n)})$.

The acetalization degree of the polyvinyl acetal resin (C) used in the invention is preferably from 55 to 88% by mole. The polyvinyl acetal resin (C) having the acetalization degree of 55% by mole or more is low in production cost and easily available, and has good melt processability. The polyvinyl acetal resin (C) having the acetalization degree of 88% by mole or less is produced very easily and economical, because it does not take a long time for the acetalization reaction in the production.

The acetalization degree of the polyvinyl acetal resin (C) is more preferably from 60 to 88% by mole, still more preferably from 70 to 88% by mole, and particularly preferably from 75 to 85% by mole. As the acetalization degree of the polyvinyl acetal resin (C) decreases, the content of hydroxyl group included in the polyvinyl acetal resin (C) increases, thereby being advantageous in view of the adhesive property to a ceramic, a metal and a synthetic resin. However, by setting the acetalization degree in the range described above, the affinity and compatibility with the hydrogenated block copolymer (A) are good, the mechanical properties of the thermoplastic polymer composition are excellent, and the adhesion strength to a ceramic, a metal and a synthetic resin is high.

The acetalization degree (% by mole) of the polyvinyl acetal resin (C) is defined by the formula shown below:

$$\text{Acetalization degree (\% by mole)}=\{k_{(1)}+k_{(2)}+ \ldots +k_{(n)}\}\text{x}2/\{k_{(1)}+k_{(2)}+ \ldots +k_{(n)}\}\text{x}2+l+m\}\text{x}100$$

(in the formula above, n, $k_{(1)}$, $k_{(2)}$, ..., $k_{(n)}$, 1 and m have the same meanings as defined above, respectively.)

The acetalization degree of the polyvinyl acetal resin (C) can be determined according to the method described in JIS K 6728 (1977). Specifically, the weight ratio ($l_0$) of the vinyl alcohol unit and the weight ratio ($m_0$) of the vinyl acetate unit are determined by titration and the weight ratio ($k_0$) of the vinyl acetal unit is calculated from the formula: $k_0=1-l_0-m_0$. Then, the molar ratio 1 of the vinyl alcohol unit is calculated from the formula: $[l=(l_0/44.1)/(l_0/44.1+m_0/86.1+2k_0/Mw(acetal))]$, and the molar ratio m of the vinyl acetate unit is calculated from the formula: $[m=(m_0/86.1)/(l_0/44.1+m_0/86.1+k_0/Mw(acetal))]$, and the molar ratio of the vinyl acetal unit ($k=k_{(1)}+k_{(2)}+ \ldots +k_{(n)}$) is calculated from the formula: $k=1-l-m$. In the formulae above, Mw(acetal) is a molecular weight of a single vinyl acetal unit, and, for example, in the case of polyvinyl butyral, Mw(acetal) is Mw(butyral)=142.2. Thus, the acetalization degree (% by mole) can be calculated from the formula: $\{k_{(1)}+k_{(2)}+ \ldots +k_{(n)}\}x2/\{k_{(1)}+k_{(2)}+ \ldots +k_{(n)}\}x2+1+m\}x100$.

The acetalization degree of the polyvinyl acetal resin (C) can also be determined by dissolving the polyvinyl acetal resin (C) in an appropriate deuterated solvent, for example, deuterated dimethyl sulfoxide and measuring $^1$H-NMR or $^{13}$C-NMR of the solution.

In the polyvinyl acetal resin (C), the vinyl alcohol unit is preferably contained from 12 to 45% by mole ($0.12 \leq l \leq 0.45$), more preferably from 12 to 40% by mole ($0.12 \leq l \leq 0.40$), and the vinyl acetate unit is preferably contained from 0 to 5% by mole ($0 \leq m \leq 0.05$), more preferably from 0 to 3% by mole ($0 \leq m \leq 0.03$).

The reaction (acetalization reaction) between the polyvinyl alcohol and the aldehyde can be performed by a known method. For example, an aqueous solvent method in which an aqueous solution of polyvinyl alcohol and an aldehyde are subjected to an acetalization reaction in the presence of an acid catalyst to deposit particles of the polyvinyl acetal resin (C); or a solvent method in which polyvinyl alcohol is dispersed in an organic solvent, subjected to a acetalization reaction with an aldehyde in the presence of an acid catalyst, and then a poor solvent to the polyvinyl acetal resin (C), for example, water, is added to the resultant reaction mixture to deposit the polyvinyl acetal resin (C) is exemplified.

The acid catalyst is not particularly limited and includes, for example, an organic acid, for example, acetic acid or p-toluenesulfonic acid; an inorganic acid, for example, nitric acid, sulfuric acid or hydrochloric acid; gas, which exhibits the acidity when made an aqueous solution, for example, carbon dioxide; and a solid acid catalyst, for example, a cation exchange resin or a metal oxide.

The slurry formed in the aqueous solvent method, the solvent method or the like is ordinarily exhibits the acidity due to the acid catalyst. The method for removing the acid catalyst includes, for example, a method in which water washing of the slurry is repeated to adjust pH to preferably from 5 to 9, more preferably from 6 to 9, and still more preferably from 6 to 8; a method in which a neutralizing agent is added to the slurry to adjust pH to preferably from 5 to 9, more preferably from 6 to 9, and still more preferably from 6 to 8; and a method of adding an alkylene oxide or the like to the slurry.

The compound used for adjusting the pH includes, for example, a hydroxide of alkali metal, for example, sodium

hydroxide or potassium hydroxide; an acetate of alkali metal, for example, sodium acetate; a carbonate of alkali metal, for example, sodium carbonate or potassium carbonate; a hydrogen carbonate of alkali metal, for example, sodium hydrogen carbonate; and ammonia or aqueous ammonia solution. The alkylene oxide includes, for example, ethylene oxide, propylene oxide and a glycidyl ether, for example, ethylene glycol diglycidyl ether.

Next, the salt formed by neutralization, the reaction residue of aldehyde and the like are removed.

The method for removal is not particularly limited and, for example, a method of repeating dehydration and water washing is ordinarily used. The water-containing polyvinyl acetal resin (C) after removing the residue and the like is, if desired, dried and then, if desired, processed into a powder form, a granule form or a pellet form.

The polyvinyl acetal resin (C) used in the invention is preferably deaerated under a reduced pressure to reduce the content of the reaction residue of aldehyde and water when processed into the powder form, the granule form or the pellet form.

(Tackifying resin)

The thermoplastic polymer composition may further contain a tackifying resin, if desired. By incorporating the tackifying resin, the moldability is more increased while maintaining the adhesive characteristic.

The tackifying resin includes, for example, an aliphatic unsaturated hydrocarbon resin, an aliphatic saturated hydrocarbon resin, an alicyclic unsaturated hydrocarbon resin, an alicyclic saturated hydrocarbon resin, an aromatic hydrocarbon resin, a hydrogenated aromatic hybrocarbon resin, a rosin ester resin, a hydrogenated rosin ester resin, a terpene phenol resin, a hydrogenated terpene phenol resin, a terpene resin, a hydrogenated terpene resin, an aromatic hydrocarbon-modified terpene resin, a coumarone-indene resin, a phenol resin and a xylene resin. The tackifying resins may be used one kind alone or may be used in combination of two or more kinds. Among them, an aliphatic saturated hydrocarbon resin, an alicyclic saturated hydrocarbon resin, a hydrogenated aromatic hydrocarbon resin or a hydrogenated terpene resin is preferred, and a hydrogenated aromatic hydrocarbon resin or a hydrogenated terpene resin is more preferred.

The softening point of the tackifying resin is preferably from 50 to 200°C, more preferably from 60 to 180°C, and still more preferably from 80 to 160°C. When the softening point is 50°C or more, the adhesive characteristic at environment temperature can be maintained. On the other hand, when the softening point is 200°C or less, the adhesive characteristic at heat treatment temperature can be maintained.

The softening point referred to herein is a value measured in accordance with ASTM28-67.

In the case where the tackifying resin is incorporated into the thermoplastic polymer composition of the invention, the content thereof is preferably from 1 to 100 parts by weight, more preferably from 5 to 70 parts by weight, still more preferably from 5 to 50 parts by weight, particularly preferably from 10 to 45 parts by weight, based on 100 parts by weight of the hydrogenated block copolymer (A). When the content of the tackifying resin is 100 parts by weight or less based on 100 parts by weight of the hydrogenated block copolymer (A), the thermoplastic polymer composition does not become hard, and flexibility and mechanical properties are easily exhibited.

(Softener)

The thermoplastic polymer composition for use in the invention may contain a softener, if desired. The softener includes, for example, a softener which is ordinarily used for rubber or plastic.

The softener includes, for example, a paraffinic, naphthenic or aromatic process oil; a phthalic acid derivative, for example, dioctyl phthalate or dibutyl phthalate; white oil, mineral oil, an oligomer of ethylene and $\alpha$-olefin, paraffin wax, liquid paraffin, polybutene, a low molecular weight polybutene and a low molecular weight polyisoprene. Among them, process oil is preferred, and paraffinic process oil is more preferred.

Moreover, a known softener, which is ordinarily used in combination with the polyvinyl acetal resin (C), for example, an organic acid ester plasticizer, for example, a monobasic organic acid ester or a polybasic organic acid ester; and a phosphoric acid plasticizer, for example, an organic phosphate or an organic phosphite, is also used.

The monobasic organic acid ester includes, for example, a glycolic ester represented by triethylene glycol dicaproate, triethylene glycol di-2-ethylbutyrate, triethylene glycol di-n-octylate or triethylene glycol di-2-ethylhexylate, which is obtained by a reaction between a glycol, for example, triethylene glycol, tetraethylene glycol or tripropylene glycol and a monobasic organic acid, for example, butyric acid, isobutyric acid, caproic acid, 2-ethylbutyric acid, heptylic acid, n-octylic acid, 2-ethylhexylic acid, pelargonic acid (n-nonylic acid) or decylic acid.

The polybasic organic acid ester includes, for example, an ester between a polybasic organic acid, for example, adipic acid, sebacic acid or azelaic acid, and an alcohol, as represented by dibutyl sebacate, dioctyl azelate or dibutylcarbitol adipate.

The organic phosphate includes, for example, tributoxyethyl phosphate, isodecyl phenyl phosphate and triisopropyl phosphate.

The softeners may be used one kind alone or may be used in combination of two or more kinds.

In the case where the softener is incorporated into the thermoplastic polymer composition of the invention, from the standpoint of flexibility, moldability and adhesive property, the content thereof is preferably from 0.1 to 300 parts by weight, further preferably from 10 to 200 parts by weight, more preferably from 1 to 200 parts by weight, still more preferably from 50 to 200 parts by weight, particularly preferably from 50 to 150 parts by weight, based on 100 parts by weight of the hydrogenated block copolymer (A).

(Other optional component)

The thermoplastic polymer composition of the invention may contain, if desired, other thermoplastic polymer, for example, an olefinic polymer containing no polar group, a styrenic polymer, a polyphenylene ether polymer or polyethylene glycol, or other thermoplastic elastomer, for example, an olefinic thermoplastic elastomer, a urethane thermoplastic elastomer, a polyamide thermoplastic elastomer or an acrylic thermoplastic elastomer, as far as the effect of the invention is not severely impaired. The olefinic polymer includes, for example, polyethylene, polypropylene, polybutene, and a block copolymer or random copolymer of propylene with other $\alpha$-olefin, for example, ethylene or l-butene.

In the case where the other thermoplastic polymer is incorporated into the thermoplastic polymer composition, the content thereof is preferably 100 parts by weight or less, more preferably 50 parts by weights or less, still more preferably 20 parts by weight or less, further more preferably 10 parts by weight or less, particularly preferably 5 parts by weight or less, based on 100 parts by weight of the hydrogenated block copolymer (A).

The thermoplastic polymer composition of the invention may contain, if desired, an inorganic filler. The inorganic filler is useful in the improvement in physical properties, for example, heat resistance or weatherability of the thermoplastic polymer composition, the adjustment in hardness, the improvement in economic efficiency as an extender and the like. The inorganic filler is not particularly limited and includes, for example, calcium carbonate, talc, magnesium hydroxide, aluminum hydroxide, mica, clay, natural silicic acid, synthetic silicicacid, titanium oxide, carbon black, barium sulfate, glass balloon and glass fiber. The inorganic fillers may be used one kind alone or may be used in combination of two or more kinds.

In the case where the inorganic filler is incorporated into the thermoplastic polymer composition, the content thereof is preferably a range in which the flexibility of the thermoplastic polymer composition is not impaired, and in general, the content is preferably 100 parts by weight or less, more preferably 70 parts by weight or less, still more preferably 30 parts by weight or less, particularly preferably 10 parts by weight or less, based on 100 parts by weight of the hydrogenated block copolymer (A).

The thermoplastic polymer composition of the present invention may contain, if desired, an antioxidant, a lubricant, a light stabilizer, a processing aid, a coloring agent, for example, a pigment or a dye, a flame retardant, an antistatic agent, a matting agent, an antiblocking agent, an ultraviolet absorbing agent, a release agent, a foaming agent, an antibacterial agent, an anti-mold agent and a perfume, in a range in which the effect of the invention is not impaired.

The antioxidant includes, for example, hindered phenol type, phosphorus type, lactone type and hydroxyl type antioxidants. Among them, a hindered phenol type antioxidant is preferred. In the case where the antioxidant is incorporated into the thermoplastic polymer composition, the content thereof is preferably a range in which coloration does not occur when the thermoplastic polymer composition obtained is melt-kneaded, and the content is preferably from 0.1 to 5 parts by weight based on 100 parts by weight of hydrogenated block copolymer (A).

The preparation method of the thermoplastic polymer composition of the invention is not particularly limited, and the composition may be prepared by any method as far as it is a method in which the components described above can be uniformly mixed. Ordinarily, a melt-kneading method is used. The melt-kneading can be performed using a melt-kneading apparatus, for example, a single-screw extruder, a twin-screw extruder, a kneader, a batch mixer, a roller or a Banbury mixer. Usually, the thermoplastic polymer composition can be obtained by performing the melt-kneading preferably at 170 to 270°C.

The thermoplastic polymer composition thus obtained has hardness in accordance with JIS K 6253, JIS-A method (hereinafter sometimes referred to as "A hardness") of preferably 90 or less, more preferably from 30 to 90, and still more preferably from 35 to 85. When the A hardness is in the range, in the case where the thermoplastic polymer composition is molded to form a molded article, flexibility, elasticity and mechanical properties are easily exhibited, and the excellent adhesive property to a synthetic resin, particularly a resin containing an inorganic filler (glass fiber or the like), a ceramic and a metal can be obtained so that it can be preferably used as a thermoplastic polymer composition.

The melt flow rate (MFR) of the thermoplastic polymer composition measured by the method in accordance with JIS K 7210 under the conditions of 230°C and load of 2.16 kg (21.18 N) is in a range of preferably from 0.1 to 100 g/10 minutes, more preferably from 0.1 to 20 g/10 minutes, and still more preferably from 0.5 to 10 g/10 minutes. When the MFR is in the range, the production of molded article is easy.

[Molded article]

The thermoplastic polymer composition of the invention is able to be subjected to heat melt molding and heating processing, and it is possible to be molded or processed by an arbitrary molding method, for example, an injection molding method, an extrusion molding method, a blow molding method, a calendar molding method or a cast molding method. The molded article thus-obtained using the thermoplastic polymer composition of the invention includes a product of arbitrary form, for example, a film form, a sheet form, a tube form or a three-dimensional form. When the thermoplastic polymer composition of the invention is used, the molded article, which is excellent in a variety of characteristics, for example, various impact resistances, for example, plane impact resistance at low temperature or falling ball impact resistance, or flexibility, can be obtained.

Moreover, the thermoplastic polymer composition of the invention is able to be compounded with other material. The other material includes, for example, a variety of thermoplastic resins other than the thermoplastic polymer composition of the invention or the composition thereof (synthetic resin), a thermosetting resin, paper, a cloth, a metal, a wood and a ceramic. In particular, since the thermoplastic polymer composition of the invention can be adhered conveniently and firmly to a ceramic, a metal, a synthetic resin or the like without performing a primer treatment, it can be suitably used as the molded article in which the thermoplastic polymer composition of the invention is adhered to such a material. The molded article may be that in which two or more adherends are adhered, and specifically include that in which ceramics are adhered to each other, that in which metals are adhered to each other, that in which synthetic resins are adhered to each other, and that in which any of two different materials are adhered to each other. The molded article, which is adhered by using the thermoplastic polymer composition of the invention, can absorb various impacts due to the flexibility of the composition and, in addition, in the case where different materials are adhered, it absorbs the distortion stress which is generated based on the difference between the respective linear expansion coefficients. Therefore, the molded article can be used under severe conditions, for example, under low temperature, under high temperature or in an environment of violent temperature change.

The ceramic which can be used in the molded article of the invention means a non-metal type inorganic material, and includes, for example, a metal oxide, a metal carbide and a metal nitride. The ceramic includes, for example, glass, a cement, alumina, zirconia, zinc oxide type ceramic, barium titanate, lead zirconate titanate, silicon carbide, silicon nitride and a ferrite.

The metal which can be used in the molded article of the invention includes, for example, iron, copper, aluminum, magnesium, nickel, chromium, zinc and an alloy including that as a component. The molded article may be a molded article having a metal surface formed by plating, for example, copper plating, nickel plating, chromium plating, tin plating, zinc plating, platinum plating, gold plating or silver plating.

The synthetic resin which can be used in the molded article of the invention includes, for example, a polyamide resin, a polyester resin, a polycarbonate resin, a polyphenylene sulfide resin, a (meth)acrylonitrile-butadiene-styrene resin, a (meth)acrylonitrile-styrene resin, a (meth)acrylate-butadiene-styrene resin, a (meth)acrylate-styrene resin, a butadiene-styrene resin, an epoxy resin, a phenol resin, a diallyl phthalate resin, a polyimide resin, a melamine resin, a polyacetal resin, a polysulfone resin, a polyether sulfone resin, a polyether imide resin, a polyphenylene ether resin, a polyarylate resin, a polyether ether ketone resin, a polystyrene resin, a syndiotactic polystyrene resin and a polyolefin resin. The resins may be used one kind alone or may be used in combination of two or more kinds.

The synthetic resin may contain an inorganic filler. The inorganic filler includes, for example, calcium carbonate, talc, magnesium hydroxide, aluminum hydroxide, mica, clay, natural silicic acid, synthetic silicic acid, titanium oxide, carbon black, barium sulfate, glass fiber and glass balloon. The inorganic fillers may be used one kind alone or may be used in combination of two or more kinds. Among them, glass fiber is preferred.

The amount of the inorganic filler added is preferably a range in which moldability and mechanical strength of the synthetic resin containing the inorganic filler are not impaired, and in general, it is preferably from 0.1 to 100 parts by weight, more preferably from 1 to 50 parts by weight, still more preferably from 3 to 40 parts by weigh, based on 100 parts by weight of the synthetic resin.

The molded article may be a molded article in which the thermoplastic polymer composition adheres to at least one selected from a ceramic, a metal and a synthetic resin or a molded article in which the thermoplastic polymer composition adheres to at least two selected from a ceramic, a metal and a synthetic resin.

The thermoplastic polymer composition and molded article of the invention can be used in a wide range of various applications, for example, automobile parts, home appliance parts, computer parts, machine parts, packings, gaskets and hoses by utilizing the characteristics thereof described above.

The thermoplastic polymer composition and molded article of the invention can be used in various fields, for example, daily commodities including clothing use, packing materials, industrial products or products for food use by utilizing the characteristics thereof. For example, it can be used for adhesion of electronic and electrical equipment, OA equipment, home appliance, consumer electrical equipment or automotive material. Moreover, it is useful for molding an adhesive member in a joint part between a glass and an aluminum sash or a metal opening in a window of automobile

or building or in a connecting part between a glass and a metal frame in a solar cell module or the like.

EXAMPLES

The invention will be described more specifically with reference to the examples and the like, but the invention should not be construed as being limited thereto.

Each component used in the examples and comparative examples is shown below. Moreover, the weight average molecular weight, molecular weight distribution, hydrogenation rate of the hydrogenated block copolymer (A), the total amount of a 1,2-bonding content and a 3,4-bond content contained in the conjugated diene block, and the tan δ are determined in the manner shown below.

-Weight average molecular weight and molecular weight distribution-

The weight average molecular weight (Mw) and number average molecular weight (Mn) were determined by gel permeation chromatography (GPC) measurement and calculated in terms of standard polystyrene, and then the molecular weight distribution (Mw/Mn) was calculated.

-Hydrogenation rate-

The hydrogenation rate was determined by measuring an iodine value of the block copolymer before and after the hydrogenation reaction.

-Total amount of 1,2-bonding content and 3,4-bonding content-

It was calculated from a ratio of an integrated value of the peaks present in 4.2 to 5.0 ppm derived from the 1,2-bonding unit and the 3,4-bonding unit and an integrated value of the peaks present in 5.0 to 5.45 ppm derived from the 1,4-bonding unit.

-tan δ-

Each hydrogenated block copolymer was molded into a sheet having a thickness of 1 mm, set to be a width of 1 cm and a length of 2 cm in Rheovibron (produced by Orientec Co., Ltd.), and tan δ was measured by increasing temperature from -150 to 200°C at a rate of 3°C/minute while applying tensile strain at a frequency of 11 Hz, thereby determining the temperature at the local maximum value derived from the conjugated diene block (D).

[Hydrogenated block copolymer (A)]

-Hydrogenated block copolymer (A1-1)-

Into a dried pressure vessel purged with nitrogen, 80 L of cyclohexane as a solvent and 0.16 L of sec-butyllithium (10% by weight cyclohexane solution) as an initiator were charged. After increasing the temperature to 50°C, 8.2 L of styrene was added to allow polymerization for 3 hours. Subsequently, 18 L of isoprene was added thereto to allow polymerization for 4 hours. The reaction solution obtained was poured into 80 L of methanol, and the solid deposited was separated by filtration and dried at 50°C for 20 hours to obtain a polystyrene-polyisoprene diblock copolymer.

Then, 10 kg of the polystyrene-polyisoprene diblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-polyisoprene diblock copolymer (hereinafter referred to as "Hydrogenated block copolymer (A1-1)"). Hydrogenated block copolymer (A1-1) obtained had a weight average molecular weight of 133,000, a styrene content of 37.5% by weight, a hydrogenation rate of 99%, a molecular weight distribution of 1.04, a total amount of a 1,2-bonding content and a 3,4-bonding content contained in the polyisoprene block of 5% by mole, and a tan δ local maximum value of -44°C.

-Hydrogenated block copolymer (A1-2)-

Into a dried pressure vessel purged with nitrogen, 80 L of cyclohexane as a solvent and 3.0 L of sec-butyllithium (10% by weight cyclohexane solution) as an initiator were charged. After increasing the temperature to 50°C, 14.6 L of

styrene was added to allow polymerization for 3 hours. Subsequently, 130 L of isoprene was added thereto to allow polymerization for 4 hours. The reaction solution obtained was poured into 80 L of methanol, and the solid deposited was separated by filtration and dried at 50°C for 20 hours to obtain a polystyrene-polyisoprene diblock copolymer.

Then, 10 kg of the polystyrene-polyisoprene diblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-polyisoprene diblock copolymer (hereinafter referred to as "Hydrogenated block copolymer (A1-2)"). Hydrogenated block copolymer (A1-2) obtained had a weight average molecular weight of 43,000, a styrene content of 13% by weight, a hydrogenation rate of 98%, a molecular weight distribution of 1.04, a total amount of a 1,2-bonding content and a 3,4-bonding content contained in the polyisoprene block of 5% by mole, and a tan $\delta$ local maximum value of -51°C.

-Hydrogenated block copolymer (A1-3)-

Into a dried pressure vessel purged with nitrogen, 80 L of cyclohexane as a solvent and 0.46 L of sec-butyllithium (10% by weight cyclohexane solution) as an initiator were charged, and 0.25 L (corresponding to 5.4 times in a stoichiometric ratio to lithium atom in the initiator) of tetrahydrofuran as an organic Lewis base was charged therein. After increasing the temperature to 50°C, 3.5 L of styrene was added to allow polymerization for 3 hours. Subsequently, 34 L of butadiene was added thereto to allow polymerization for 4 hours. The reaction solution obtained was poured into 80 L of methanol, and the solid deposited was separated by filtration and dried at 50°C for 20 hours to obtain a polystyrene-polybutadiene diblock copolymer.

Then, 10 kg of the polystyrene-polybutadiene diblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-polybutadiene diblock copolymer (hereinafter referred to as "Hydrogenated block copolymer (A1-3)"). Hydrogenated block copolymer (A1-3) obtained had a weight average molecular weight of 70,500, a styrene content of 13% by weight, a hydrogenation rate of 98%, a molecular weight distribution of 1.05, a total amount of a 1,2-bonding content and a 3,4-bonding content contained in the polybutadiene block of 40% by mole, and a tan $\delta$ local maximum value of -43°C.

-Hydrogenated block copolymer (A1-4)-

Into a dried pressure vessel purged with nitrogen, 80 L of cyclohexane as a solvent and 1.1 L of sec-butyllithium (10% by weight cyclohexane solution) as an initiator were charged. After increasing the temperature to 50°C, 7.5 L of styrene was added to allow polymerization for 3 hours. Subsequently, a mixed solution of 13 L of isoprene and 15 liter of butadiene was added thereto to allow polymerization for 4 hours. The reaction solution obtained was poured into 80 L of methanol, and the solid deposited was separated by filtration and dried at 50°C for 20 hours to obtain a polystyrene-poly(isoprene/butadiene) diblock copolymer.

Then, 10 kg of the polystyrene-poly(isoprene/butadiene) diblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-poly(isoprene/butadiene) diblock copolymer (hereinafter referred to as "Hydrogenated block copolymer (Al-4)"). Hydrogenated block copolymer (A1-4) obtained had a weight average molecular weight of 46,000, a styrene content of 28% by weight, a hydrogenation rate of 98%, a molecular weight distribution of 1.05, a total amount of a 1,2-bonding content and a 3,4-bonding content contained in the poly(isoprene/butadiene) block of 5% by mole, and a tan $\delta$ local maximum value of -44°C.

-Hydrogenated block copolymer (A1'-1)-

Into a dried pressure vessel purged with nitrogen, 80 L of cyclohexane as a solvent and 0.35 L of sec-butyllithium (10% by weight cyclohexane solution) as an initiator were charged, and 0.52 L (corresponding to 15 times in a stoichiometric ratio to lithium atom in the initiator) of tetrahydrofuran as an organic Lewis base was charged therein. After increasing the temperature to 50°C, 4.2 L of styrene was added to allow polymerization for 3 hours. Subsequently, 22 L of isoprene was added thereto to allow polymerization for 4 hours. The reaction solution obtained was poured into 80

L of methanol, and the solid deposited was separated by filtration and dried at 50°C for 20 hours to obtain a polystyrene-polyisoprene diblock copolymer.

Then, 10 kg of the polystyrene-polyisoprene diblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-polyisoprene diblock copolymer (hereinafter referred to as "Hydrogenated block copolymer (A1'-1)"). Hydrogenated block copolymer (A1'-1) obtained had a weight average molecular weight of 100,000, a styrene content of 20% by weight, a hydrogenation rate of 90%, a molecular weight distribution of 1.04, a total amount of a 1,2-bonding content and a 3,4-bonding content contained in the polyisoprene block of 60% by mole, and a tan δ local maximum value of 1.5°C.

-Hydrogenated block copolymer (A2-1)-

Into a dried pressure vessel purged with nitrogen, 80 L of cyclohexane as a solvent and 0.13 L of sec-butyllithium (10% by weight cyclohexane solution) as an initiator were charged. After raising the temperature to 50°C, 1.5 L of styrene was added to allow polymerization for 3 hours. Subsequently, 27 L of isoprene was added thereto to allow polymerization for 4 hours, and 1.5 L of styrene was further added thereto to allow polymerization for 3 hours. The reaction solution obtained was poured into 80 L of methanol, and the solid deposited was separated by filtration and dried at 50°C for 20 hours to obtain a polystyrene-polyisoprene-polystyrene triblock copolymer.

Then, 10 kg of the polystyrene-polyisoprene-polystyrene triblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and them vacuum-dried to obtain a hydrogenated product of the polystyrene-polyisoprene-polystyrene triblock copolymer (hereinafter referred to as "Hydrogenated block copolymer (A2-1)"). Hydrogenated block copolymer (A2-1) obtained had a weight average molecular weight of 183,000, a styrene content of 13% by weight, a hydrogenation rate of 98%, a molecular weight distribution of 1.01, a 1,4-bonding content contained in the polyisoprene block of 5% by mole, and a tan δ local maximum value of-51°C.

-Hydrogenated block copolymer (A2-2)-

Into a dried pressure vessel purged with nitrogen, 80 L of cyclohexane as a solvent and 0.23 L of sec-butyllithium (10% by weight cyclohexane solution) as an initiator were charged, and 0.13 L (corresponding to 5.4 times in a stoichiometric ratio to lithium atom in the initiator) of tetrahydrofuran as an organic Lewis base was charged therein. After increasing the temperature to 50°C, 1.7 L of styrene was added to allow polymerization for 3 hours. Subsequently, 34 L of butadiene was added thereto to allow polymerization for 4 hours, and 1.7 L of styrene was further added thereto to allow polymerization for 3 hours. The reaction solution obtained was poured into 80 L of methanol, and the solid deposited was separated by filtration and dried at 50°C for 20 hours to obtain a polystyrene-polybutadiene-polystyrene triblock copolymer.

Then, 10 kg of the polystyrene-polybutadiene-polystyrene triblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-polybutadiene-polystyrene triblock copolymer (hereinafter referred to as "Hydrogenated block copolymer (A2-2)"). Hydrogenated block copolymer (A2-2) obtained had a weight average molecular weight of 141,000, a styrene content of 13% by weight, a hydrogenation rate of 98%, a molecular weight distribution of 1.05, a total amount of a 1,2-bonding content and a 3,4-bonding content contained in the polybutadiene block of 40% by mole, and a tan δ local maximum value of -43°C.

-Hydrogenated block copolymer (A2-3)-

Into a dried pressure vessel purged with nitrogen, 80 L of cyclohexane as a solvent and 0.29 L of sec-butyllithium (10% by weight cyclohexane solution) as an initiator were charged. After increasing the temperature to 50°C, 2.3 L of styrene was added to allow polymerization for 3 hours. Subsequently, 28 L of isoprene was added thereto to allow polymerization for 4 hours, and 2.3 L of styrene was further added thereto to allow polymerization for 3 hours. The reaction solution obtained was poured into 80 L of methanol, and the solid deposited was separated by filtration and

dried at 50°C for 20 hours to obtain a polystyrene-polyisoprene-polystyrene triblock copolymer.

Then, 10 kg of the polystyrene-polyisoprene-polystyrene triblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-polyisoprene-polystyrene triblock copolymer (hereinafter referred to as "Hydrogenated block copolymer (A2-3)"). Hydrogenated block copolymer (A2-3) obtained had a weight average molecular weight of 96,000, a styrene content of 18% by weight, a hydrogenation rate of 99%, a molecular weight distribution of 1.03, a 1,4-bonding content contained in the polyisoprene block of 5% by mole, and a tan δ local maximum value of -47°C.

-Hydrogenated block copolymer (A2-4)-

Into a dried pressure vessel purged with nitrogen, 80 L of cyclohexane as a solvent and 0.55 L of sec-butyllithium (10% by weight cyclohexane solution) as an initiator were charged. After increasing the temperature to 50°C, 3.8 L of styrene was added to allow polymerization for 3 hours. Subsequently, a mixed solution of 13 L of isoprene and 15 liter of butadiene was added thereto to allow polymerization for 4 hours, and 3.8 L of styrene was further added thereto to allow polymerization for 3 hours. The reaction solution obtained was poured into 80 L of methanol, and the solid deposited was separated by filtration and dried at 50°C for 20 hours to obtain a polystyrene-poly(isoprene/butadiene)-polystyrene triblock copolymer.

Then, 10 kg of the polystyrene-poly(isoprene/butadiene)-polystyrene triblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-poly(isoprene/butadiene)-polystyrene triblock copolymer (hereinafter referred to as "Hydrogenated block copolymer (A2-4)"). Hydrogenated block copolymer (A2-4) obtained had a weight average molecular weight of 92,000, a styrene content of 28% by weight, a hydrogenation rate of 99%, a molecular weight distribution of 1.03, a total amount of a 1,2-bonding content and a 3,4-bonding content contained in the poly(isoprene/butadiene) block of 5% by mole, and a tan δ local maximum value of -44°C.

-Hydrogenated block copolymer (A2-5)-

Into a dried pressure vessel purged with nitrogen, 64 L of cyclohexane as a solvent and 0.15 L of sec-butyllithium (10% by weight cyclohexane solution) as an initiator were charged, and 0.3 L (corresponding to 15 times in a stoichiometric ratio to lithium atom in the initiator) of tetrahydrofuran as an organic Lewis base was charged therein. After increasing the temperature to 50°C, 2.3 L of styrene was added to allow polymerization for 3 hours. Subsequently, 23 L of isoprene was added thereto to allow polymerization for 4 hours, and 2.3 L of styrene was further added thereto to allow polymerization for 3 hours. The reaction solution obtained was poured into 80 L of methanol, and the solid deposited was separated by filtration and dried at 50°C for 20 hours to obtain a polystyrene-polyisoprene-polystyrene triblock copolymer.

Then, 10 kg of the polystyrene-polyisoprene-polystyrene triblock copolymer was dissolved in 200 L of cyclohexane, and after adding palladium carbon (palladium supporting amount: 5% by weight) as a hydrogenation catalyst in an amount of 5% by weight based on the copolymer, the reaction was performed under conditions of a hydrogen pressure of 2 MPa and 50°C for 10 hours. After allowing to cooling and depressurization, the palladium carbon was removed by filtration, and the filtrate was concentrated and then vacuum-dried to obtain a hydrogenated product of the polystyrene-polyisoprene-polystyrene triblock copolymer (hereinafter referred to as "Hydrogenated block copolymer (A2-5)"). Hydrogenated block copolymer (A2-5) obtained had a weight average molecular weight of 107,000, a styrene content of 21% by weight, a hydrogenation rate of 85%, a molecular weight distribution of 1.04, a total amount of a 1,2-bonding content and a 3,4-bonding content contained in the polyisoprene block of 60% by mole, and a tan δ local maximum value of 4.2°C.

[Polar group-containing polypropylene-based resin (B)]

-(B-1)-

Using a batch mixer, 42 g of polypropylene "Prime Polypro F327" (produced by Prime Polymer Co., Ltd.), 160 mg of maleic anhydride and 42 mg of 2,5-dimethyl-2,5-di(tertiary butylperoxy)hexane were melt-kneaded under the conditions of 180°C and the number of revolution of a screw of 40 rpm to obtain Polar group-containing polypropylene-based resin (B-1). Polar group-containing polypropylene-based resin (B-1) obtained had MFR [230°C, load of 2.16 kg (21.18 N)] of 6 g/10 minutes, a maleic anhydride concentration of 0.3%, and a melting point of 138°C.

The maleic anhydride concentration is a value obtained by titrating Polar group-containing polypropylene-based resin (B-1) obtained with a methanol solution of potassium hydroxide, and hereinafter the same. The melting point is a value read from an endothermic peak of a differential scanning calorimetry curve when increasing a temperature in a rate of 10°C/minute.

[Polyvinyl acetal resin (C)]

-(C-1)-

To an aqueous solution prepared by dissolving 10 parts by weight of polyvinyl alcohol having an average polymerization degree of 500 and a saponification degree of 99% by mole, 7 parts by weight of n-butylaldehyde and 8.5 parts by weight of an aqueous 35 % hydrochloric acid were added and stirred to perform an acetalization reaction, thereby depositing a resin. The resin was washed by a known method until the pH value reached 6. Then, the resin was suspended in an aqueous alkaline medium and post-treated with stirring. The resin was washed until the pH value reached 7 and dried until the volatile component was reduced to 0.3% or less to obtain Polyvinyl acetal resin (C-1) having an acetalization degree of 80% by mole.

[Other component]

Tackifying resin: Regalite 1100 (produced by Eastman Chemical Co.)

Preparation of test pieces in the examples and comparative examples and measurement or evaluation of each physical property were performed as shown below.

(1) Measurement of melt flow rate (MFR)

A sheet of the thermoplastic polymer composition prepared in each of the examples and comparative examples shown below was finely cut, and MFR was measured under the conditions of 230°C and load of 2.16 kg (21.18 N) by the method in accordance with JIS K 7210. The MFR was used as an index of the moldability. As the value of MFR increases, the moldability becomes excellent.

(2) Measurement of Hardness

Sheets of the thermoplastic polymer composition prepared in each of the examples and comparative examples shown below were piled to a thickness of 6 mm, and Type A hardness was measured using a Type A Durometer in accordance with JIS K 6253.

(3) Tensile break strength and tensile elongation at break

A dumbbell shape test piece (dumbbell shape No. 5) was prepared from a sheet of the thermoplastic polymer composition prepared in each of the examples and comparative examples shown below and tensile break strength and tensile elongation at break were measured at 23°C and a tensile speed of 500 mm/minute by the method in accordance with JIS K 6251.

(4) Measurement of adhesive force

As to a laminate of PET/thermoplastic polymer composition/glass plate, a laminate of PET/thermoplastic polymer composition/aluminum plate and a laminate of PET/thermoplastic polymer composition/6-nylon, prepared by the method described below, peel strengths between the thermoplastic polymer composition layer and the glass plate, between the thermoplastic polymer composition layer and the aluminum plate and between the thermoplastic polymer composition layer and the 6-nylon were measured respectively under the conditions of a peel angle of 180°, a tensile rate of 50 mm/minute and at an ambient temperature shown in Table 2 in accordance with JIS K 6854-2, thereby determining the adhesive force.

(5) Creep test

The thermoplastic polymer composition was molded into a sheet having a thickness of 1 mm and cut into a size of 10 mm x 10 mm The sheet was sandwiched between two steel plates each having a width of 10 mm and a length of 50 mm to pile so that an adhesive area of 10 mm x 10 mm was formed, followed by adhering them together at 180°C and 0.01 MPa for 2 seconds. One end of the adhesive body obtained was grasped with a clip to be hung the adhesive body lengthwise, allowed to stand at 150°C for 60 minutes, and after taking it out the displacement of the steel plates was measured to evaluate as an index of the thermal creep resistance.

(6) Storage modulus

The thermoplastic polymer composition was molded into a sheet having a thickness of 1 mm, and set to be a width of 1 cm and a length of 2 cm in Rheovibron (produced by Orientec Co., Ltd.). Temperature was increased from -150 to 200°C at a rate of 2 °C/minute while applying tensile strain at a frequency of 11 Hz, and storage modules at -40°C was measured to evaluate as an index of flexibility at low temperature. When the storage modules is less than 1.5 GPa, the flexibility is recognized, and when the storage modules is less than 0.5 GPa, the flexibility is excellent.

<Preparation of laminate with glass plate>

Both surfaces of a glass plate having a length of 75 mm, a width of 25 mm and a thickness of 1 mm were cleaned with an aqueous solution of surfactant, methanol, acetone and distilled water as cleaning solutions in this order, and dried. The glass plate, a sheet of the thermoplastic polymer composition prepared in each of the examples and comparative examples shown below and a polyethylene terephthalate (PET) sheet having a thickness of 50 μm were piled in this order, and the resulting piled sheet was arranged in the central part of a metal spacer having an outer size of 200 mm x 200 mm, an inner size of 150 mm x 150 mm and a thickness of 2 mm

The piled sheet and the metal spacer were sandwiched between polytetrafluoroethylene sheets, and further sandwiched with metal plates from the outside. The resulting piled product was subjected to compression molding using a compression molding machine at 160°C and under a load of 20 kgf/cm$^2$ (2N/mm$^2$) for 3 minutes to obtain a laminate of PET/thermoplastic polymer composition/glass plate.

<Preparatiûn of laminate with aluminum plate>

A laminate of PET/thermoplastic polymer composition/aluminum plate was obtained by performing the same operations as in the preparation of the laminate with glass plate, except that both surfaces of an aluminum plate having a length of 75 mm, a width of 25 mm and a thickness of 1 mm were cleaned with an aqueous solution of surfactant and distilled water as cleaning solutions in this order, and dried.

<Preparation of laminate with 6-nylon>

A laminate of PET/thermoplastic polymer composition/6-nylon was obtained by performing the same operations as in the preparation of the laminate with glass plate, except that 6-nylon 1013B (produced by Ube Industries, Ltd.) was injection molded into a sheet form having a thickness of 1 mm and the sheet was cut into a size having a length of 75 mm, a width of 25 mm and a thickness of 1 mm and that the sheet was subjected to compression molding using a compression molding machine at 230°C and under a load of 20 kgf/cm$^2$ (2N/mm$^2$) for 3 minutes.

<Examples 1 to 8 and Comparative Examples 1 to 7>

The raw materials shown in Table 1 were melt-kneaded in the proportions shown in Table 2 (weight ratio) using a twin-screw extruder under the conditions of 230°C and screw revolution of 200 rpm, and then extruded in a strand form. The strand-formed material was cut to obtain pellets of the thermoplastic polymer composition. The pellets obtained were compression molded using a compression molding machine under the conditions of 230°C and a load of 100 kgf/cm$^2$ (9.8N/mm$^2$) for 3 minutes, thereby obtaining a sheet of the thermoplastic polymer composition having a thickness of 1 mm was obtained.

According to the measuring methods described above, the MFR, hardness, tensile break strength and tensile elongation at break of the sheet of the thermoplastic polymer composition obtained were measured. Moreover, the adhesive force between the thermoplastic polymer composition obtained and the glass plate, the aluminum plate or the 6-nylon was measured according to the method described above. Furthermore, the thermal creep resistance and the flexibility at low temperature (storage modules) of the thermoplastic polymer composition obtained were measured according to the method described above. The results are shown in Table 2.

TABLE 1

| Hydrogenated Block Copolymer | Polymer Skeleton (before Hydrogenation)(*1) | Mw | St Content (%) | Hydrogenation Rate | Mw/Mn | Degree of Vinylation(*2) | tan δ Local Maximum Value (°C) |
|---|---|---|---|---|---|---|---|
| A1-1 | S-I | 133,000 | 37.5 | 99 | 1.04 | 5 | -44 |
| A1-2 | S-I | 43,000 | 13 | 98 | 1.04 | 5 | -51 |
| A1-3 | S-B | 70,500 | 13 | 98 | 1.05 | 40 | -43 |
| A1-4 | S-I/B | 46,000 | 28 | 98 | 1.05 | 5 | -44 |
| A1'-1 | S-I | 100,000 | 20 | 90 | 1.04 | 60 | 1.5 |
| A2-1 | S-I-S | 183,000 | 13 | 98 | 1.01 | 5 | -51 |
| A2-2 | S-B-S | 141,000 | 13 | 98 | 1.05 | 40 | -43 |
| A2-3 | S-I-S | 96,000 | 18 | 99 | 1.03 | 5 | -47 |
| A2-4 | S-I/B-S | 92,000 | 28 | 99 | 1.03 | 5 | -44 |
| A2-5 | S-I-S | 107,000 | 21 | 85 | 1.04 | 60 | 4.2 |

(*1) S-I: Styrene-isoprene diblock copolymer
S-B: Styrene-butadiene diblock copolymer
S-I/B: Styrene-isoprene/butadiene diblock copolymer
S-I-S: Styrene-isoprene-styrene triblock copolymer
S-B-S: Styrene-butadiene-styrene triblock copolymer
S-I/B-S: Styrene-isoprene/butadiene-styrene triblock copolymer
(*2) Total amount of 1,2-bonding content and 3,4-bonding content (% by mole)

TABLE 2

| | | | Example 1 | Example 2 | Example 3 | Example 4 | Example 5 | Example 6 | Example 7 | Example 8 |
|---|---|---|---|---|---|---|---|---|---|---|
| Component Contained | | | | | | | | | | |
| Block Copolymer | A1-1 | pbw | | | | | 50 | | | 50 |
| | A1-2 | pbw | 50 | 25 | | | | 25 | 50 | |
| | A1-3 | pbw | | | 50 | | | | | |
| | A1-4 | pbw | | | | 50 | | | | |
| | A1'-1 | pbw | | | | | | | | |
| | A2-1 | pbw | 50 | 25 | | | | 25 | 50 | |
| | A2-2 | pbw | | | 50 | | | | | |
| | A2-3 | pbw | | 50 | | | | | | |
| | A2-4 | pbw | | | | 50 | | | | |
| | A2-5 | pbw | | | | | 50 | 50 | | 50 |
| Polar Group-containing Polypropylene-based Resin | B-1 | pbw | 25 | 25 | 25 | 25 | 25 | 25 | 25 | 25 |
| Polyvinyl Acetal Resin | C-1 | pbw | | | | | | | 20 | 20 |
| Tackifying Resin | Regalite 1100 | pbw | | | | | | | | |
| Physical Property | | | | | | | | | | |
| MFR [230°C,2.16 kg] | g/10 minutes | | 4.5 | 5.3 | 5.6 | 1.0 | 0.5 | 4.3 | 4.6 | 0.8 |
| Hardness | Type A | | 50 | 64 | 65 | 80 | 77 | 69 | 53 | 79 |
| Tensile Break Strength | MPa | | 10.5 | 9.7 | 9 | 20 | 6.7 | 12.5 | 10.8 | 6.9 |
| Tensile Elongation at Break | % | | 600 | 720 | 600 | 500 | 510 | 920 | 780 | 500 |
| Adhesive Force to | N/25 mm | | 116 | 45 | 42 | 70 | 200 | 100 | 120 | 200 |

| | | Example 1 | Example 2 | Example 3 | Example 4 | Example 5 | Example 6 | Example 7 | Example 8 |
|---|---|---|---|---|---|---|---|---|---|
| Aluminum (23°C) | | | | | | | | | |
| Adhesive Force to Aluminum (-40°C) | N/25 mm | 96 | 94 | 130 | 100 | 200 | 150 | 100 | 200 |
| Adhesive Force to 6-nylon (23°C) | N/25 mm | 70 | 50 | 60 | 50 | 126 | 70 | 75 | 130 |
| Initial Adhesive Force to Glass (23°C, after 10 Minutes) | N/25 mm | 0 | 0 | 0 | 0 | 0 | 0 | 100 | 180 |
| Adhesive Force to Glass (23°C, after 10 Days) | N/25 mm | 45 | 50 | 40 | 75 | 180 | 105 | 110 | 190 |
| Creep Test (150°C) | mm | 1 | 1 | 3 | 1 | 0 | 1 | 1 | 0 |
| Storage Modules (-40°C) | GPa | 0.07 | 0.07 | 0.08 | 0.3 | 1.1 | 0.85 | 0.07 | 1.1 |

TABLE 2 (Cont'd)

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Component Contained | | | | | | | | | |
| Block Copolymer | A1-1 | pbw | | | | | | | 100 |
| | A1-2 | pbw | 50 | 50 | | | | | |
| | A1-3 | pbw | | | | | | | |
| | A1-4 | pbw | | | | | | | |
| | A1'-1 | pbw | | | 50 | | | | |
| | A2-1 | pbw | 50 | 50 | 50 | | | | |
| | A2-2 | pbw | | | | | | | |
| | A2-3 | pbw | | | | | 50 | 100 | |
| | A2-4 | pbw | | | | | | | |
| | A2-5 | pbw | | | | 100 | 50 | | |
| Polar Group-containing Polypropylene-based Resin | B-1 | pbw | | | 25 | 25 | 25 | 25 | 25 |
| Polyvinyl Acetal Resin | C-1 | pbw | | | | | | | |
| Tackifying Resin | Regalite 1100 | pbw | | 100 | | | | | |
| Physical Property | | | | | | | | | |
| MFR [230°C,2.16 kg] | g/10 minutes | | 7 | 100< | 10 | 5 | 5.8 | 5.2 | 0.3 |
| Hardness | Type A | | 36 | 16 | 73 | 75 | 77 | 74 | 77 |
| Tensile Break Strength | MPa | | 10.8 | -- | 11 | 15 | 23 | 23 | 2 |
| Tensile Elongation at Break | % | | 1,200 | 1,100< | 500 | 680 | 730 | 670 | 100 |
| Adhesive Force to Aluminum (23°C) | N/25 mm | | 3 | 34 | 150 | 167 | 16 | 3 | Unmeasurable |

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Adhesive Force to Aluminum (-40°C) | N/25 mm | 3 | 20 | Brittle Fracture | Brittle Fracture | 20 | 3 | Unmeasurable |
| Adhesive Force to 6-nylon (23°C) | N/25 mm | 5 | 5 | 100 | 104 | 20 | 7 | Unmeasurable |
| Initial Adhesive Force to Glass (23°C, after 10 Minutes) | N/25 mm | 2 | 20 | 0 | 0 | 0 | 0 | Unmeasurable |
| Adhesive Force to Glass (23°C, after 1 Days) | N/25 mm | 3 | 20 | 120 | 175 | 15 | 0 | Unmeasurable |
| Creep Test (150°C) | mm | Fallen | Fallen | 1 | 0 | Fallen | Fallen | 1 |
| Storage Modules (-40°C) | GPa | 0.009 | 1.0 | 1.9 | 1.9 | 0.9 | 0.08 | 0.07 |

In all of Examples 1 to 8, the flexibility is excellent in a broad temperature range, the good adhesive property to all of glass, aluminum and 6-nylon is achieved, and the moldability, mechanical properties and thermal creep resistance are excellent. In Examples 1, 2 and 4 to 8 each using an isoprene monomer or an isoprene/butadiene monomer in the

conjugated diene block (D) of the hydrogenated block copolymer (A1), the displacement in the creep test is slight, and in particular, it can be seen that the thermal creep resistance is excellent. Moreover, in Examples 5 and 8 each using (A2') as the hydrogenated block copolymer (A2), the adhesive property to various adherends and the thermal creep resistance are particularly well balanced. Furthermore, in Examples 7 and 8 each containing the polyvinyl acetal resin (C-1), the adhesive force to glass was expressed immediately after the adhesion.

On the other hand, in Comparative Example 1 not containing the polar group-containing polypropylene-based resin (B), the adhesive property is not expressed. In Comparative Example 2 using the tackifying resin, the adhesive force is still insufficient, and particularly, the adhesive property to 6-nylon is poor. Moreover, the thermal creep resistance was poor and the steel plate had fallen during the creep test. Furthermore, since it is a sticky material, it is not suitable for use as a molded article. In Comparative Example 3 using (A1'-1) in place of (A1) and in Comparative Example 4 in which the component (A) is only composed of the component (A2), embrittlement at low temperature is severe and the thermoplastic polymer composition had caused the brittle fracture during the adhesion test at -40°C, although the adhesive performance is obtained. In Comparative Examples 5 and 6 in which the component (A1) was not used but only the component (A2) was used similar to Comparative Example 4, the adhesive force was insufficient and in addition, the thermal creep resistance was poor and the steel plate had fallen during the creep test. In Comparative Example 7 not containing the component (A2), the tensile break strength is significantly low. Since the test piece is very brittle, the test piece was broken at the time of separation in the adhesive force measurement and the measurement could not be performed.

INDUSTRIAL APPLICABILITY

Since the thermoplastic polymer composition according to the invention is excellent in the flexibility in a broad temperature range and is excellent in the adhesive force, the joined body which is adhered using the composition can absorb a variety of impact due to the flexibility of the adhesive layer and, in addition, in the case where different materials are adhered, it absorbs the distortion stress which is generated based on the difference between the respective linear expansion coefficients. Therefore, the joined body is able to be used under severe conditions, for example, under low temperature, under high temperature or in an environment of violent temperature change.

Moreover, the thermoplastic polymer composition itself is able to be molded into an arbitrary molded article, for example, a film form, a sheet form or a three-dimensional form. Since the molded article is easy to handle different from a tacky material or a liquid adhesive, it is useful for improving productivity of the joined body.

Utilizing the characteristics described above, the thermoplastic polymer composition and molded article of the invention can be used in a wide range of various applications, for example, automobile parts, home appliances, computer parts, machine parts, packings, gaskets and hoses.

While the invention has been described in detail and with reference to specific embodiments thereof, it will be apparent to those skilled in the art that various changes and modifications can be made therein without departing from the spirit and scope of the invention.

This application is based on a Japanese patent application filed on August 26, 2014 (Japanese Patent Application No. 2014-172062), and the contents thereof are incorporated herein by reference.

**Claims**

1. A thermoplastic polymer composition comprising from 10 to 100 parts by weight of a polar group-containing polypropylene-based resin (B) based on 100 parts by weight of a hydrogenated block copolymer (A) in which a block copolymer containing a polymer block (S) including an aromatic vinyl compound unit and a polymer block (D) including a conjugated diene compound unit is hydrogenated,
   wherein the hydrogenated block copolymer (A) is a mixture containing:
   a hydrogenated block copolymer (A1) having at least one tan $\delta$ local maximum value in a range from -60 to -40°C, in which a block copolymer represented by formula (i) or (ii) shown below is hydrogentated:

   (i) $(S\text{-}D)_n$

   (ii) $(D\text{-}S)_n\text{-}D$

   wherein S is a polymer block including an aromatic vinyl compound unit, D is a polymer block including a conjugated diene compound unit, and n is an integer from 1 to 5; and
   a hydrogenated block copolymer (A2) in which a block copolymer represented by formula (iii) shown below is hydrogenated:

(iii) $(S-D)_m-S$

wherein, S is a polymer block icluding an aromatic vinyl compound unit, D is a polymer block including a conjugated diene compound unit, and m is an integer from 1 to 5, and
wherein a weight ratio of the hydrogenated block copolymer (A1) to the hydrogenated block copolymer (A2) is from 20:80 to 99:1.

**2.** The thermoplastic polymer composition as claimed in Claim 1, wherein at least a part of the hydrogenated block copolymer (A2) is a hydrogenated block copolymer (A2') in which a block copolymer represented by formula (iv) shown below is hydrogenated:

(iv) $(S-D2)_m-S$

wherein S is a polymer block including an aromatic vinyl compound unit, D2 is a polymer block including a conjugated diene compound unit, in which a total amount of a 1,2-bonding content and a 3,4-bonding content is 40% by mole or more based on a total content of whole bonding forms of the conjugated diene, and m is an integer from 1 to 5.

**3.** The thermoplastic polymer composition as claimed in Claim 2, wherein a content ratio of the hydrogenated block copolymer (A2') is from 20 to 100% by weight in the hydrogenated block copolymer (A2).

**4.** The thermoplastic polymer composition as claimed in any one of Claims 1 to 3, wherein the polymer block (D) including a conjugated diene compound unit contained in the hydrogenated block copolymer (A1) is a polymer block containing a conjugated diene compound in which a total amount of a 1,2-bonding amount and a 3,4-bonding amount is less than 40% by mole based on a total amount of whole bonding forms of the conjugated diene.

**5.** The thermoplastic polymer composition as claimed in any one of Claims 1 to 4, wherein the hydrogenated block copolymer (A1) is a hydrogenated block copolymer in which a diblock copolymer represented by a formula shown below is hydrogenated:

S-D

wherein S and D have the same meanings as defined above, respectively.

**6.** The thermoplastic polymer composition as claimed in any one of Claims 1 to 5, wherein the conjugated diene compound unit (D) is an isoprene unit or a mixture unit of isoprene and butadiene.

**7.** The thermoplastic polymer composition as claimed in any one of Claims 1 to 6, wherein the polar group-containing polypropylene-based resin (B) is a carboxylic acid-modified polypropylene-based resin.

**8.** The thermoplastic polymer composition as claimed in any one of Claims 1 to 7, further comprising from 10 to 100 parts by weight of a polyvinyl acetal resin (C).

**9.** The thermoplastic polymer composition as claimed in Claim 8, wherein the polyvinyl acetal resin (C) is a polyvinyl butyral resin.

**10.** A molded article using the thermoplastic polymer composition as claimed in any one of Claims 1 to 9.

**11.** The molded article as claimed in Claim 10, wherein the thermoplastic polymer composition is adhered to at least one selected from a ceramic, a metal and a synthetic resin.

**12.** The molded article as claimed in Claim 11, wherein the thermoplastic polymer composition is adhered to at least two selected from a ceramic, a metal and a synthetic resin.

**Patentansprüche**

**1.** Thermoplastische Polymerzusammensetzung, umfassend von 10 bis 100 Gewichtsteile eines Harzes (B) auf Polypropylenbasis, das eine polare Gruppe enthält, bezogen auf 100 Gewichtsteile eines hydrierten Blockcopolymers (A), in dem ein Blockcopolymer, enthaltend einen Polymerblock (S), der eine aromatische Vinylverbindungseinheit einschließt, und einen Polymerblock (D), der eine konjugierte Dienverbindungseinheit einschließt, hydriert ist, wobei das hydrierte Blockcopolymer (A) ein Gemisch ist, das enthält:
ein hydriertes Blockcopolymer (A1) mit mindestens einem lokalen tan-δ-Maximalwert in einem Bereich von -60 bis -40°C, in dem ein Blockcopolymer, dargestellt durch die nachstehend gezeigte Formel (i) oder (ii), hydriert ist:

(i) $(S\text{-}D)_n$

(ii) $(D\text{-}S)_n\text{-}D$

wobei S ein Polymerblock, der eine aromatische Vinylverbindungseinheit einschließt, ist, D ein Polymerblock, der eine konjugierte Dienverbindungseinheit einschließt, ist und n eine ganze Zahl von 1 bis 5 ist; und
ein hydriertes Blockcopolymer (A2), in dem ein Blockcopolymer, dargestellt durch die nachstehend gezeigte Formel (iii), hydriert ist:

(iii) $(S\text{-}D)_m\text{-}S$

wobei S ein Polymerblock, der eine aromatische Vinylverbindungseinheit einschließt, ist, D ein Polymerblock, der eine konjugierte Dienverbindungseinheit einschließt, ist und m eine ganze Zahl von 1 bis 5 ist, und
wobei ein Gewichtsverhältnis des hydrierten Blockcopolymers (A1) zu dem hydrierten Blockcopolymer (A2) von 20:80 bis 99:1 beträgt.

**2.** Thermoplastische Polymerzusammensetzung nach Anspruch 1, wobei mindestens ein Teil des hydrierten Blockcopolymers (A2) ein hydriertes Blockcopolymer (A2') ist, in dem ein Blockcopolymer, dargestellt durch die nachstehend gezeigte Formel (iv), hydriert ist:

(iv) $(S\text{-}D2)_m\text{-}S$

wobei S ein Polymerblock, der eine aromatische Vinylverbindungseinheit einschließt, ist, D2 ein Polymerblock, der eine konjugierte Dienverbindungseinheit einschließt, ist, in dem eine Gesamtmenge eines 1,2-Bindungsgehalts und eines 3,4-Bindungsgehalts 40 Mol-% oder mehr, bezogen auf einen Gesamtgehalt der gesamten Bindungsformen des konjugierten Diens, beträgt und m eine ganze Zahl von 1 bis 5 ist.

**3.** Thermoplastische Polymerzusammensetzung nach Anspruch 2, wobei ein Gehaltsverhältnis des hydrierten Blockcopolymers (A2') von 20 bis 100 Gew.-% in dem hydrierten Blockcopolymer (A2) beträgt.

**4.** Thermoplastische Polymerzusammensetzung nach einem der Ansprüche 1 bis 3, wobei der Polymerblock (D), der eine konjugierte Dienverbindungseinheit einschließt, enthalten in dem hydrierten Blockcopolymer (A1), ein Polymerblock ist, der eine konjugierte Dienverbindung enthält, in dem eine Gesamtmenge einer 1,2-Bindungsmenge und einer 3,4-Bindungsmenge weniger als 40 Mol-%, bezogen auf eine Gesamtmenge der gesamten Bindungsformen des konjugierten Diens, beträgt.

**5.** Thermoplastische Polymerzusammensetzung nach einem der Ansprüche 1 bis 4, wobei das hydrierte Blockcopolymer (A1) ein hydriertes Blockcopolymer ist, in dem ein Diblockcopolymer, dargestellt durch die nachstehend gezeigte Formel, hydriert ist:

S-D

wobei S und D jeweils dieselben Bedeutungen, wie vorstehend definiert, aufweisen.

**6.** Thermoplastische Polymerzusammensetzung nach einem der Ansprüche 1 bis 5, wobei die konjugierte Dienverbindungseinheit (D) eine Isopreneinheit oder eine Gemischeinheit von Isopren und Butadien ist.

**7.** Thermoplastische Polymerzusammensetzung nach einem der Ansprüche 1 bis 6, wobei das Harz (B) auf Polypropylenbasis, das eine polare Gruppe enthält, ein Carbonsäure-modifiziertes Harz auf Polypropylenbasis ist.

**8.** Thermoplastische Polymerzusammensetzung nach einem der Ansprüche 1 bis 7, weiter umfassend von 10 bis 100

Gewichtsteile eines Polyvinylacetalharzes (C).

9. Thermoplastische Polymerzusammensetzung nach Anspruch 8, wobei das Polyvinylacetalharz (C) ein Polyvinylbutyralharz ist.

10. Geformter Gegenstand, der die thermoplastische Polymerzusammensetzung nach einem der Ansprüche 1 bis 9 verwendet.

11. Geformter Gegenstand nach Anspruch 10, wobei die thermoplastische Polymerzusammensetzung an mindestens einem, ausgewählt aus einer Keramik, einem Metall und einem synthetischem Harz, haftet.

12. Geformter Gegenstand nach Anspruch 11, wobei die thermoplastische Polymerzusammensetzung an mindestens zweien, ausgewählt aus einer Keramik, einem Metall und einem synthetischem Harz, haftet.

**Revendications**

1. Composition de polymère thermoplastique comprenant de 10 à 100 parties en poids d'une résine à base de polypropylène contenant un groupe polaire (B) sur la base de 100 parties en poids d'un copolymère séquencé hydrogéné (A) dans lequel un copolymère séquencé contenant une séquence de polymère (S) incluant un motif de composé vinyl aromatique et une séquence de polymère (D) incluant un motif de composé diène conjugué est hydrogéné, dans laquelle le copolymère séquencé hydrogéné (A) est un mélange contenant :
un copolymère séquencé hydrogéné (A1) ayant au moins une valeur maximale locale de tan $\delta$ dans une plage de -60 à -40 °C, dans lequel un copolymère séquencé représenté par la formule (i) ou (ii) montrée ci-dessous est hydrogéné :

**(i)** $\mathbf{(S\text{-}D)_n}$

**(ii)** $\mathbf{(D\text{-}S)_n\text{-}D}$

où S est une séquence de polymère incluant un motif de composé vinyl aromatique, D est une séquence de polymère incluant un motif de composé diène conjugué, et n est un entier de 1 à 5 ; et
un copolymère séquencé hydrogéné (A2) dans lequel un copolymère séquencé représenté par la formule (iii) montrée ci-dessous est hydrogéné :

**(iii)** $\mathbf{(S\text{-}D)_m\text{-}S}$

Où, S est une séquence de polymère incluant un motif de composé vinyl aromatique, D est une séquence de polymère incluant un motif de composé diène conjugué, et m est un entier de 1 à 5, et
dans laquelle un rapport en poids du copolymère séquencé hydrogéné (A1) au copolymère séquencé hydrogéné (A2) est de 20:80 à 99:1.

2. Composition de polymère thermoplastique selon la revendication 1, dans laquelle au moins une partie du copolymère séquencé hydrogéné (A2) est un copolymère séquencé hydrogéné (A2') dans lequel un copolymère séquencé représenté par la formule (iv) montrée ci-dessous est hydrogéné :

**(iv)** $\mathbf{(S\text{-}D2)_m\text{-}S}$

où S est une séquence de polymère incluant un motif de composé vinyl aromatique, D2 est une séquence de polymère incluant un motif de composé diène conjugué, dans lequel une quantité totale d'une teneur en liaison 1,2 et une teneur en liaison 3,4 est de 40 % en mole ou plus sur la base d'une teneur totale en toutes les formes de liaison du diène conjugué, et m est un entier de 1 à 5.

3. Composition de polymère thermoplastique selon la revendication 2, dans laquelle une proportion de teneur du copolymère séquencé hydrogéné (A2') est de 20 à 100 % en poids dans le copolymère séquencé hydrogéné (A2).

4. Composition de polymère thermoplastique selon l'une quelconque des revendications 1 à 3, dans laquelle la séquence de polymère (D) incluant un motif de composé diène conjugué contenu dans le copolymère séquencé

hydrogéné (A1) est une séquence de polymère contenant un composé diène conjugué dans lequel une quantité totale d'une teneur en liaison 1,2 et une teneur en liaison 3,4 est inférieure à 40 % en mole sur la base d'une teneur totale en toutes les formes de liaison du diène conjugué.

**5.** Composition de polymère thermoplastique selon l'une quelconque des revendications 1 à 4, dans laquelle le copolymère séquencé hydrogéné (A1) est un copolymère séquencé hydrogéné dans lequel un copolymère diséquencé représenté par une formule montrée ci-dessous est hydrogéné :

S-D

où S et D ont les mêmes significations que celles définies ci-dessus, respectivement.

**6.** Composition de polymère thermoplastique selon l'une quelconque des revendications 1 à 5, dans laquelle le motif de composé diène conjugué (D) est un motif isoprène ou un motif mélangé d'isoprène et de butadiène.

**7.** Composition de polymère thermoplastique selon l'une quelconque des revendications 1 à 6, dans laquelle la résine à base de polypropylène contenant un groupe polaire (B) est une résine à base de polypropylène modifiée par un acide carboxylique.

**8.** Composition de polymère thermoplastique selon l'une quelconque des revendications 1 à 7, comprenant en outre de 10 à 100 parties en poids d'une résine de poly(vinyl acétal) (C).

**9.** Composition de polymère thermoplastique selon la revendication 8, dans laquelle la résine de poly(vinyl acétal) (C) est une résine de poly(vinyl butyral).

**10.** Article moulé utilisant la composition de polymère thermoplastique telle que revendiquée dans l'une quelconque des revendications 1 à 9.

**11.** Article moulé selon la revendication 10, dans lequel la composition de polymère thermoplastique adhère à au moins un élément choisi parmi une céramique, un métal et une résine synthétique.

**12.** Article moulé selon la revendication 11, dans lequel la composition de polymère thermoplastique adhère à au moins deux éléments choisis parmi une céramique, un métal et une résine synthétique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013105392 A
- WO 2012026501 A
- JP 2710812 B
- JP 2014172062 A